# EUROPÄISCHE PATENTSCHRIFT

(11) **EP 2 505 905 B1**
(45) Veröffentlichungstag und Bekanntmachung des Hinweises auf die Patenterteilung: **08.05.2019**
(21) Anmeldenummer: 12160542.2
(22) Anmeldetag: 21.03.2012
(51) Int. Cl.: F16N 7/38, F16N 29/02

(54) **Dosiervorrichtung, Schmiersystem und Verfahren zum Abgeben einer vorbestimmten Schmiermittelmenge**
Metering device, lubrication system and method for dispensing a pre-defined volume of lubricant
Dispositif de dosage, système de graissage et procédé de distribution d'une quantité d'agent lubrifiant prédéterminée

(30) Priorität: 28.03.2011 DE 202011000700 U; 11.04.2011 DE 102011007125
(43) Veröffentlichungstag der Anmeldung: 03.10.2012
(73) Patentinhaber: Aktiebolaget SKF, 415 50 Göteborg (SE)
(72) Erfinder: Kreutzkämper, Jürgen, 10405 Berlin (DE); Nelson, Hans-Dieter, 16341 Panketal (DE); Schmidt, Fabian, 14979 Großbeeren (DE); Schwartz, Jörg, 14482 Potsdam (DE)
(74) Vertreter: Schonecke, Mitja

(56) Entgegenhaltungen:
- EP-A1- 1 579 951
- WO-A1-2010/085489
- JP-A- 2001 315 041
- Gyger: "Micro valves SMLD", , 31. August 2010 (2010-08-31), XP002716648, Gefunden im Internet: URL:http://www.fluidics.ch/files/micro_val ves_smld.pdf [gefunden am 2013-11-18]

## Beschreibung

Ausführungsbeispiele betreffen eine Dosiervorrichtung, ein Schmiersystem und ein Verfahren zum Abgeben einer vorbestimmten Schmiermittelmenge.

Viele Bauteile von Maschinen und Maschinenteile, die eine Relativbewegung zueinander ausführen, werden mithilfe von Lagern geführt, um beispielsweise einen Verschleiß oder eine Geräuschentwicklung zu reduzieren und so die Lebensdauer und/oder Wartungsintervalle der betreffenden Maschine bzw. der betreffenden Bauteile zu erhöhen. Lager werden hierbei in einer Vielzahl unterschiedlicher Ausführungsformen, beispielsweise als Gleitlager oder als Wälzlager verwendet. Die Art der Relativbewegung, die mithilfe der Lage zu führen ist, bestimmt die eingesetzte Lagertechnik wenigstens teilweise. So werden beispielsweise Linearlager von anderen Lagern unterschieden, die Drehbewegungen (Rotation) zwischen Bauteilen ermöglichen.

Lager werden so in fast allen mechanischen Komponenten, bei denen Relativbewegungen auftreten, verwendet. Hierbei unterscheiden sich die Anforderungen, die an das Lager während des Einsatzes der Maschine gestellt werden, zum Teil sehr deutlich. Während bei einigen Anwendungen nahezu keine bzw. eher unbedeutende Belastungen der Lager auftreten, gibt es andere Einsatzgebiete von Lagern, bei denen beispielsweise aufgrund einer statischen mechanischen Belastung, aufgrund von Umgebungsbedingungen (z.B. Temperatur, korrosive Medien, auf die Maschine einwirkende stoßartige Bewegungen) oder aufgrund auftretender Geschwindigkeiten oder Beschleunigungen besonders stark belastet werden. Gerade im Bereich solcher anspruchsvollen Lager kann es sehr ratsam sein, eine kontrollierte Zuführung eines Schmiermittels zu dem Lager zu gewährleisten. So haben Studien gezeigt, dass ein erheblicher Anteil von Lagerausfällen mittelbar oder unmittelbar auf eine unzulängliche Schmierung zurückzuführen ist. Neben einer unzureichenden Versorgung mit dem Schmiermittel, also einer unzureichenden Schmierung an sich, kann hier insbesondere eine Verschmutzung der betreffenden Lager mittelbar auch auf eine unzulängliche Schmierung zurückgeführt werden. Weitere Gründe für Lagerausfälle sind häufig im Bereich von Installationsfehlern, einer Überlastung, einem Auftreten eines mechanischen Lagerungsfehlers oder auch einem Bedienungsfehler (Handlingfehler) zu suchen.

Mit steigenden Anforderungen an die Lager steigen ebenfalls die Anforderungen, die an die Schmierung derselben gestellt werden. Beispielsweise im Bereich der Werkzeugmaschinen werden heute zunehmend Hochgeschwindigkeitsspindeln eingesetzt, die Drehzahlen von 20000, 40000 oder 60000 Umdrehungen/min und mehr ermöglichen. Bei manchen Geräten werden sogar mehr als 100000 Umdrehungen/min (z. B. bis zu 150000 Umdrehungen/min) verwendet. Diese stellen einerseits aufgrund der hohen Drehzahlen und aufgrund des nur beschränkt zur Verfügung stehenden Bauraums andererseits sehr hohe Anforderungen sowohl an das Lager als auch an die Schmierung.

Aber auch andere technische Gebiete, bei denen Lager zum Einsatz kommen, stellen steigende Anforderungen an die Dosiergenauigkeit, die Reaktionszeit, die Mobilität und Kontinuität, die Überwachung, die Umweltverträglichkeit und die Zuverlässigkeit der Schmierstoffversorgung. Häufig soll darüber hinaus ebenfalls die zum Einsatz gebrachte Schmierstoffmenge reduziert und der Luftverbrauch der Maschine reduziert werden.

Eine konventionelle Fettschmierung ist häufig bei hohen Drehzahlen nicht mehr möglich, kann sich sogar in manchen Anwendungsfällen als schädlich erweisen.

Konventionell wird heute häufig eine Öl + Luft-Schmierung der Lager verwendet. Hierbei werden die Lager seitlich mit einem Ölnebel bzw. einem Schlieren aus einer Düse beschossen, wobei in dem Inneren der Düse Öl eingebracht wird, das dann durch einen Hilfsluftstrom (z.B. Pressluft) mitgerissen und durch die Düse zu dem Lager hingetragen wird. Neben einem erheblichen Verbrauch an Pressluft, deren Erzeugung zu einem deutlichen Energieverbrauch führt, kann so mit dem Hilfsluftstrom auch Feuchtigkeit und/oder Verunreinigungen mitgerissen werden, die sich in dem Lager absetzen und dort zu einer Beschädigung führen können.

Bei der Öl + Luft-Schmierung wird das Öl in die Düse geleitet und dort im Rahmen eines zufälligen bzw. statistischen Prozesses von der Hilfsluft ergriffen und durch die Düse zu dem Wälzlager beschleunigt. Hierbei hängt es von einer Vielzahl von kaum kontrollierbaren Bedingungen ab, welche genaue Ölmenge zu dem Lager transportiert wird. So schwankt beispielsweise der Ölstand in der Düse. Ebenso handelt es sich um einen rein statistischen Prozess, wieviel Öl durch den Hilfsluftstrom mitgerissen wird.

Hierdurch kann eine Öl + Luft-Schmierung häufig keine gleichmäßige Ölversorgung ermöglichen und daher ungenau sein, da unklar ist, wo genau in dem Inneren der Düse wieviel Öl sich befindet und wieviel daher durch die Düse in Form eines Schlieren zu einem bestimmten Zeitpunkt austritt. Aufgrund dieser Ungewissheit kann es zu einer Über- oder Unterschmierung des Lagers zu einem bestimmten Zeitpunkt kommen, obwohl die Schmierung aktiviert ist. Hierdurch kann die Öl + Luft-Schmierung eine gewisse Latenzzeit aufweisen, also als träge empfunden werden.

Die JP 2001 315041 A bezieht sich auf eine Hauptwellenvorrichtung einer Werkzeugmaschine, und die Schmiervorrichtung, die dem Lager einer Hauptwellenvorrichtung Schmieröl zuführt.

Die Broschüre "Micro valves SMLD - Sub-Micro-Liquid-Dispenser" der Fritz Gyger AG beschreibt ein Abgabesystem basierend auf Mikroventilen, die mit unterschiedlichen Düsendurchmessern erhältlich sind. Bei dem System handelt es sich um ein modulares Abgabesystem, dessen Controller bis zu 16 Mikroventile unabhängig voneinander ansteuern kann.

Ausgehend hiervon besteht daher ein Bedarf, eine genauere bzw. definiertere Abgabe eines Schmiermittels zu einem Maschinenteile einer Maschine zu ermöglichen.

Dieser Bedarf wird durch eine Dosiervorrichtung gemäß Patentanspruch 1, durch ein Schmiersystem gemäß Patentanspruch 6 oder durch ein Verfahren zum Abgeben einer vorbestimmten Schmiermittelmenge gemäß Patentanspruch 9 befriedigt.

Eine Dosiervorrichtung zum Bereitstellen einer vorbestimmten Schmiermittelmenge gemäß einem Ausführungsbeispiel umfasst ein Schmiermittelreservoir, das ausgebildet ist, ein Schmiermittel aufzunehmen und über einen Auslass des Schmiermittelreservoirs unter Druck abzugeben, und eine Dosiereinrichtung, die ein Mikroventil umfasst. Das Mikroventil ist mit dem Auslass des Schmiermittelreservoirs strömungsmäßig gekoppelt und ausgebildet, um die vorbestimmte Schmiermittelmenge definiert abzugeben. Die Dosiereinrichtung ist ferner von dem Schmiermittelreservoir räumlich trennbar.

Ein Schmiermittelsystem gemäß einem Ausführungsbeispiel umfasst eine solche Dosiervorrichtung und eine Maschine mit einem zu schmierenden Maschinenteil, wobei das Maschinenteil mit dem Mikroventil der Dosiervorrichtung strömungsmäßig gekoppelt ist, sodass das Mikroventil die vorbestimmte Schmiermittelmenge definiert an das Maschinenteil abgeben kann. Das Schmiermittelreservoir ist von der Dosiereinrichtung räumlich getrennt angeordnet.

Ein Verfahren zum Abgeben einer vorbestimmten Schmiermittelmenge gemäß einem Ausführungsbeispiel umfasst ein Abgeben eines Schmiermittels aus einem Schmiermittelreservoir unter Druck an ein Mikroventil einer räumlich getrennten Dosiereinrichtung und ein definiertes Abgeben der vorbestimmten Schmiermittelmenge über das Mikroventil an ein Maschinenteil einer Maschine.

Ausführungsbeispielen liegt die Erkenntnis zugrunde, dass eine genauere bzw. definiertere Abgabe einer vorbestimmten Schmiermittelmenge durch den Einsatz eines Mikroventils möglich ist, das möglichst nahe an einem zu schmierenden Maschinenteil einer Maschine angeordnet werden kann. Hierdurch können Zuleitungswege, in denen aufgrund von Leckagen oder anderen unerwünschten Effekten Schmiermittel verloren geht, verkürzt werden, sodass eine Schmiermittelversorgung mit einer verbesserten Genauigkeit erreichbar ist. Das Schmiermittelreservoir kann an einem anderen Platz angebracht werden, an dem gegebenenfalls mehr Bauraum zur Verfügung steht. Das Mikroventil ist hierbei eingangseitig mit einem Auslass des Schmiermittelreservoirs strömungsmäßig gekoppelt. Das Schmiermittelreservoir gibt das Schmiermittel an das Mikroventil unter Druck ab. Hierdurch kann eine verbesserte Schmierung des Maschinenteils der Maschine ermöglicht werden, da die Dosierung nahe an dem betreffenden Maschinenteil erfolgen kann.

Hierbei wird unter einer vorbestimmten Schmiermittelmenge nicht nur eine über eine vorbestimmte Abgabedauer eines einzelnen Abgabezyklus kontinuierlich abgegebene, vorbestimmte Schmiermittelmenge verstanden, sondern auch eine entsprechende, unterbrochen oder nicht kontinuierlich abgegebene Schmiermittelmenge über mehr als einen Abgabezyklus verstanden, wobei sich die Abgabezyklen hinsichtlich ihrer Dauer voneinander unterscheiden können. Auch kann während eines oder mehrerer Abgabezyklen eine zeitliche Durchflussleistung kontrolliert bzw. gesteuert variieren. Ebenso wird unter einer vorbestimmten Schmiermittelmenge auch ein über eine Abgabedauer abgegebener Schmiermittelfluss verstanden, der kontinuierlich, aber gegebenenfalls hinsichtlich seiner zeitlichen Durchflussleistung kontrolliert bzw. gesteuert variiert. Anders ausgedrückt wird die vorbestimmte Schmiermittelmenge definiert und nicht statistisch von dem Mikroventil an ein zu schmierendes Maschinenteil abgegeben.

Das Mikroventil ist hierbei so mit dem Ausgang des Schmiermittelreservoirs gekoppelt, dass an einem Eingang des Mikroventils das unter Druck stehende Schmiermittel bereitsteht. Dieses kann dann durch das Mikroventil blockiert oder zu einem Ausgang des Mikroventils durchgelassen werden. Anders ausgedrückt ist das Mikroventil mit dem Ausgang des Schmiermittelreservoirs strömungsmäßig gekoppelt.

Das Mikroventil kann hierbei beispielsweise als Kolbenventil, Membranventil, Tellerventil, Kugelventil, Schieberventil oder auch mittels einer anderen Ventiltechnik umgesetzt werden. Es kann beispielsweise als Magnetventil, also als elektromagnetisches Ventil, oder auch als elektromechanisches Ventil ausgestaltet sein.

Das Schmiermittel kann beispielsweise ein flüssiges Medium sein. Hierzu zählen beispielsweise Öl, aber auch niederviskose Fette und andere flüssige Schmierstoffe bzw. Schmiermittel.

In anderen Worten ist die Dosiervorrichtung bzw. die Mikropumpe ausgebildet, um die vorbestimmte Schmierstoffmenge an ein Maschinenteil einer Maschine definiert abzugeben bzw. definiert zu dispensieren bzw. an dieses sie definiert auszustoßen bzw. in diese definiert einzubringen, also in einer kontrollierten Art und Weise und nicht nur in einem statistischen Mittel.

Bei einer Dosiervorrichtung gemäß einem Ausführungsbeispiel kann das Mikroventil ausgebildet sein, um eine kleinste Schmiermittelmenge als die vorbestimmte Schmiermittelmenge definiert abzugeben, die höchstens 10 µl beträgt. Bei anderen Ausführungsbeispielen kann die kleinste Schmiermittelmenge auch 5 µl, 1 µl, 750 nl, 500 nl, 300 nl, 200 nl, 100 nl oder 50 nl entsprechen. Hierbei gelten die Beziehungen 1 µl = 1 mm³ und 1 nl = 10⁻³ µl = 10⁻³ mm³.

Bei einer Dosiervorrichtung gemäß einem Ausführungsbeispiel kann das Mikroventil ausgebildet sein, um auf ein Steuersignal hin von einem vollständig geschlossenen Zustand in einen vollständig geöffneten Zustand zu wechseln und die vorbestimmte Schmiermittelmenge über eine Abgabedauer abzugeben. Das Mikroventil kann so beispielsweise ausgebildet sein, dass dieses die vorbestimmte Schmiermittelmenge abgibt, solange es in dem vollständig geöffneten Zustand ist.

Bei Ausführungsbeispielen kann das Mikroventil grundsätzlich auch als dichtendes Regelventil ausgestaltet sein, sodass dieses auch mehr als den vollständig geöffneten und den vollständig geschlossenen Zustand annehmen kann. Das Mikroventil kann daher ausgebildet sein, um zumindest teilweise eine Steuerung oder Regelung der vorbestimmten Schmiermittelmenge durch eine Änderung des Zustands des Mikroventils zu ermöglichen, bei der das Mikroventil wenigstens einen weiteren definierten Zustand annehmen kann, der von dem vollständig geöffneten und dem vollständig geschlossenen Zustand verschieden ist. Ein Zustand ist hierbei definiert, wenn er durch eine gezielte Ansteuerung des Mikroventils für eine definierbare Zeitdauer erreichbar ist.

Bei anderen Ausführungsbeispielen kann das Mikroventil auch ausgebildet sein, um nur den vollständig geöffneten und den vollständig geschlossenen Zustand annehmen zu können. Anders ausgedrückt kann es sich bei dem Mikroventil um ein 2/2-Wege-Mikroventil oder auch um ein Sperrventil handeln.

Ein Steuersignal kann hierbei beispielsweise elektrisch, mechanisch, optisch oder magnetisch erfolgen. Es kann durch ein Bereitstellen eines Signals, durch ein Ändern eines Signals hinsichtlich eines charakteristischen Wertes (z. B. eines Spannungswertes, eines Stromwertes, einer Intensität, einer Feldstärke, einer Flussdichte) oder auch durch ein Ausbleiben eines solchen erzeugt werden.

Eine Dosiervorrichtung gemäß einem Ausführungsbeispiel kann eine Mehrzahl von Mikroventilen umfassen, wobei die Mehrzahl von Mikroventilen das Mikroventil umfasst, und wobei die Mikroventile der Mehrzahl von Mikroventilen mit dem Auslass des Schmiermittelreservoirs strömungsmäßig gekoppelt sind. Hierbei können die Mikroventile der Mehrzahl von Mikroventilen bei Ausführungsbeispielen auch unterschiedlich ausgeführt sein. So kann beispielsweise ein Mikroventil der Mehrzahl von Mikroventilen als dichtendes Regelventil, ein weiteres Mikroventil der Mehrzahl von Mikroventilen als 2/2-Wege-Mikroventil ausgebildet sein.

Hierdurch können aus einem zentralen Schmiermittelreservoir über mehrere Mikroventile unterschiedliche Maschinen- oder Bauteile mit einem Schmiermittel versorgt werden.

Eine Dosiervorrichtung gemäß einem Ausführungsbeispiel kann ferner einen Durchflusssensor aufweisen, der so angeordnet und ausgebildet ist, dass eine Durchflussmenge des Schmiermittels bestimmbar ist, die das Schmiermittelreservoir durch seinen Ausgang verlässt und/oder durch das Mikroventil fließt. Die Durchflussmenge kann hierbei ein Volumen oder auch eine Masse einer durch das Mikroventil fließenden Menge des Schmiermittels sein. Ebenso kann es sich auch um ein Volumen oder eine Masse des aus dem Ausgang des Schmiermittelreservoirs fließenden Schmiermittels handeln.

Der Durchflusssensor kann hierbei beispielsweise ein mechanisch-volumetrisches Messverfahren, ein Wirkdruck-Messverfahren oder Staudruck-Messverfahren, ein thermisches Verfahren, ein akustisches Messverfahren, ein magnetisch-induktives Messverfahren, ein optisches Messverfahren oder ein gyroskopisches Messverfahren anwenden.

Weist die Dosiervorrichtung mehrere Mikroventile auf, kann dieses ebenfalls eine Mehrzahl von Durchflusssensoren aufweisen. So kann eine Mehrzahl dieser Mikroventile derart mit jeweils einem Durchflusssensor gekoppelt bzw. ein Durchflusssensor einem Mikroventil zugeordnet sein, sodass für jedes Mikroventil ein Schmiermittelfluss unabhängig von einem anderen Schmiermittelfluss bestimmbar ist.

Der Durchflusssensor kann hierbei ein Sensorsignal bereitstellen oder ausgeben, welches eine Information bezüglich der Durchflussmenge umfasst.

Hierdurch kann es möglich sein, die durch das Mikroventil abgegebene Schmiermittelmenge zu überwachen und mit der vorbestimmten Schmiermittelmenge zu vergleichen. Hierdurch kann eine Überprüfung oder Kalibration der Dosiervorrichtung während des Betriebs ermöglicht werden. Auch kann gegebenenfalls eine permanente Überwachung und/oder Regelung der von dem Mikroventil abgegebenen vorbestimmten Schmiermittelmenge erfolgen.

Eine solche Dosiervorrichtung gemäß einem Ausführungsbeispiel kann ferner eine Umgehungsleitung mit einem Umgehungsventil aufweisen, wobei die Umgehungsleitung parallel zu dem Durchflusssensor geschaltet ist, sodass ein Durchfluss des Schmiermittels durch den Durchflusssensor teilweise oder vollständig auf die Umgehungsleitung durch das Umgehungsventil umschaltbar ist. Die Umgehungsleitung kann so mit einem ersten und einem zweiten Anschluss des Durchflusssensors gekoppelt sein. Bei dem Umgehungsventil kann es sich beispielsweise um ein Sperr- oder 2/2-Wegeventil handeln, das in der Umgehungsleitung angeordnet ist und so den Schmiermittelfluss durch die Umgehungsleitung hindern kann. Es kann sich beispielsweise auch um ein 3/2-Ventil handeln, bei dem der Schmiermittelfluss wechselseitig zwischen dem Durchflusssensor und dem Umgehungsventil schaltbar ist. Weist die Dosiervorrichtung mehr als ein Mikroventil und mehr als einen Durchflusssensor auf, kann diese optional auch für mehr als einen Durchflussmesser, also beispielsweise für einige oder alle Durchflusssensoren eine Umgehungsleitung mit einem Umgehungsventil aufweisen.

Hierdurch kann gegebenenfalls eine Reduzierung von Strömungswiderständen oder auch eine Entlastung des Durchflusssensors erzielbar sein, die gegebenenfalls zu einer Verlängerung und/oder Schonung des Durchflusssensors beitragen kann.

Bei einer Dosiervorrichtung gemäß einem Ausführungsbeispiel kann das Schmiermittelreservoir einen mit einem Federelement beaufschlagten Kolben oder eine mit einem Federelement beaufschlagte Membran aufweisen, wobei der Kolben oder die Membran so angeordnet ist, dass diese das aufgenommene Schmiermittel unter Druck setzen kann, wobei ein Federelement beispielsweise eine Druckfeder, eine Zugfeder, eine Luftfeder, eine Gasdruckfeder, eine Torsionsfeder, eine Drehstabfeder, eine Biegefeder oder eine Elastomerfeder oder einen anderen Federtyp umfassen kann. Bei einer Dosiervorrichtung gemäß einem Ausführungsbeispiel kann so das Schmiermittelreservoir ausgebildet sein, um den Druck auf das aufgenommene Schmiermittel auszuüben. Je nach verwendetem Federtyp können unterschiedliche Federgeometrien verwendet werden, also beispielsweise Schraubenfedern, Tonnenfedern, Tellerfedern oder auch Blattfedern, um nur einige Beispiele zu nennen. Hierdurch kann gegebenenfalls eine externe Druckquelle, also beispielsweise eine Pumpe oder eine Pressluftzuführung eingespart werden.

Bei einer Dosiervorrichtung gemäß einem Ausführungsbeispiel kann das Schmiermittelreservoir einen Medienanschluss für ein unter einem externen Druck stehendes Medium oder Fördermedium aufweist, wobei der Medienanschluss mit einem ersten Teilvolumen des Schmiermittelreservoirs strömungsmäßig gekoppelt ist, wobei das Schmiermittelreservoir ein zweites Teilvolumen umfasst, um das Schmiermittel aufzunehmen, und wobei das erste und das zweite Teilvolumen druckmäßig miteinander gekoppelt sind.

Das erste und das zweite Teilvolumen sind druckmäßig miteinander gekoppelt, sodass also ein einem der beiden Teilvolumina aufgebauter Druck auf das andere Teilvolumen übertragbar ist. Handelt es sich beispielsweise um ein gasförmiges Medium, wie etwa Luft oder ein anderes Gas oder Gasgemisch, können die beiden Teilvolumina unmittelbar, also beispielsweise in einem gemeinsamen Gefäß oder Druckbehälter oder über Rohr- oder Schlauchverbindungen, miteinander in Verbindung stehen. Ist beispielsweise eine Trennung des Mediums von dem Schmiermittel ratsam oder notwendig, um beispielsweise eine Kontamination des Schmiermittels zu reduzieren oder zu unterbinden, kann bei Ausführungsbeispielen zwischen dem ersten Teilvolumen und dem zweiten Teilvolumen ein verschiebbarer oder verformbarer Trennkörper angeordnet sein, also beispielsweise eine verschiebbare oder verformbare Membran oder einen verschiebbaren Kolben, wobei der Trennkörper ausgebildet ist, um einen unmittelbaren Kontakt des Mediums in dem ersten Teilvolumen und des aufgenommenen Schmiermittels in dem zweiten Teilvolumen zu unterbinden oder zu reduzieren.

Wie die Ausführungen mittels verschiebbarer Trennkörper zeigen, können bei Ausführungsbeispielen das erste und das zweite Teilvolumen hinsichtlich ihrer Größe bzw. Volumenwerte variabel sein.

Hierdurch ist es gegebenenfalls möglich, ein größeres Schmiermittelreservoir vorzusehen, da ein zusätzlicher Bauraum für druckerzeugende Komponenten oder Geräte (z. B. Pumpen) entfallen kann.

Bei einer solchen Dosiervorrichtung gemäß einem Ausführungsbeispiel kann das Medium gasförmig sein, und das Schmiermittelreservoir eine Ventileinheit aufweisen, die ausgebildet ist, um den Medienanschluss des Schmiermittelreservoirs von dem ersten Teilvolumen trennbar zu machen und um einen Überdruck in dem ersten Teilvolumen abbaubar zu machen. Die Ventileinheit kann beispielsweise ein definiertes Leck aufweisen, durch welches das gasförmige Medium an die Umgebung oder an ein Auffang- oder Abführsystem überführt werden kann. Hierdurch kann gegebenenfalls eine leichtere Wartung oder ein leichteres Befüllen oder Nachfüllen des Schmiermittelreservoirs mit dem Schmiermittel ermöglicht werden.

Bei einer Dosiervorrichtung gemäß einem Ausführungsbeispiel kann das Schmiermittelreservoir einen Füllstandsensor aufweisen, der ausgebildet ist, um eine Vorratsmenge des in dem Schmiermittelreservoir aufgenommenen Schmiermittels erfassbar zu machen und um ein eine Information bezüglich der Vorratsmenge umfassendes Sensorsignal an eine Steuereinheit zu übermitteln, und/oder bei der das Schmiermittelreservoir einen Drucksensor aufweist, der ausgebildet ist, um einen Druck des in dem Schmiermittelreservoir aufgenommenen Schmiermittels erfassbar zu machen und um ein eine Information bezüglich des Drucks umfassendes Sensorsignal an die Steuereinheit zu übermitteln.

Als Füllstandsensor kann grundsätzlich jede Art von Sensor, also beispielsweise ein optisch, mechanisch, thermisch oder elektrisch arbeitender Sensor herangezogen werden. Je nach Anforderungsprofil kann hierbei bei unterschiedlichen Ausführungsbeispielen das Sensorsignal lediglich ein Unter- oder Überschreiten der Vorratsmenge bezogen auf einen Schwellenwert anzeigen. Anders ausgedrückt kann das Sensorsignal bezüglich der Vorratsmenge nur die Information umfassen, dass diese einen Schwellenwert unter- oder überschritten hat, wobei der Schwellenwert vorbestimmt, programmierbar oder änderbar ist.

Bei anderen Ausführungsbeispielen kann der Füllstandsensor auch ausgebildet sein, um ein Sensorsignal bereitzustellen, das weitere Informationen bezüglich der Vorratsmenge umfasst. So kann der Füllstandsensor beispielsweise eine Information bezüglich der Vorratsmenge umfassen, die zwischen einem minimalen und einem maximalen Wert kontinuierliche Werte, quasikontinuierliche Werte oder eine Mehrzahl unterschiedlicher, diskreter Werte umfassen bzw. annehmen kann.

Auch ein Drucksensor kann entsprechend mittels unterschiedlicher Techniken ausgeführt sein. Ein solcher Drucksensor kann beispielsweise als piezoresistiver Drucksensor, als piezoelektrischer Drucksensor, als frequenzanaloger Drucksensor, als Hallelement-Drucksensor, als magnetoresistiver Drucksensor, als kapazitiver Drucksensor oder als induktiver Drucksensor ausgeführt sein.

Auch dieser Sensor kann derart ausgebildet sein, dass er lediglich ein Unter- oder Überschreiten eines Schwellenwertes oder auch weitere Informationen im Rahmen des Sensorsignals bereitstellen kann. Daher gelten auch für diesen die zuvor gemachten Aussagen im Hinblick auf einen Druck bzw. Druckwert des aufgenommenen Schmiermittels in dem Schmiermittelreservoir.

Hierdurch kann gegebenenfalls ein Betrieb der Maschine, an die die Dosiervorrichtung angeschlossen bzw. gekoppelt ist, sicherer werden, da eine Störung, ein Fehler oder auch ein anstehender Wartungsbedarf frühzeitig erkennbar sein kann.

Eine Dosiervorrichtung gemäß einem Ausführungsbeispiel kann eine Dosiereinrichtung umfassen, wobei die Dosiereinrichtung das Mikroventil umfasst und die Dosiereinrichtung von dem Schmiermittelreservoir räumlich trennbar ist. Bei einem solchen Ausführungsbeispiel kann das Mikroventil möglichst nahe an einem zu schmierenden Maschinenteil einer Maschine angeordnet werden. Hierdurch können Zuleitungswege, in denen aufgrund von Leckagen oder anderen unerwünschten Effekten Schmiermittel verloren geht, verkürzt werden, sodass eine Schmiermittelversorgung mit einer verbesserten Genauigkeit erreichbar ist. Das Schmiermittelreservoir kann an einem anderen Platz angebracht werden, an dem gegebenenfalls mehr Bauraum zur Verfügung steht. Bei einer solchen Dosiervorrichtung gemäß einem Ausführungsbeispiel können die Dosiereinrichtung und das Schmiermittelreservoir wenigstens 0.5 m voneinander räumlich trennbar sein. Eine Dosiervorrichtung gemäß einem Ausführungsbeispiel kann so nicht nur als eine einzige Systemkomponente ausgeführt sein. Sie kann vielmehr auch mit räumlich trennbaren Einzelkomponenten ausgeführt werden. So kann die Dosiervorrichtung beispielsweise derart ausgebildet sein, dass die Dosiereinrichtung und das Schmiermittelreservoir wenigstens 0.5 m, wenigstens 1 m, wenigstens 2 m, wenigstens 5 m oder wenigstens 10 m voneinander räumlich trennbar sind. Hierdurch kann eine bessere Anpassung der Dosiervorrichtung an Randbedingungen erzeugt werden, die sich aus der Maschine bzw. ihrem Maschinenteil oder aus anderen, z. B. gesetzlichen Randbedingungen ergeben.

Bei einer solchen Dosiervorrichtung gemäß einem Ausführungsbeispiel kann das Schmiermittelreservoir ein erstes Gehäuse und die Dosiereinrichtung ein von dem ersten Gehäuse verschiedenes zweites Gehäuse umfassen. Bei Ausführungsbeispielen kann also das Schmiermittelreservoir und/oder die Dosiereinrichtung jeweils ein separates Gehäuse aufweisen. Das Schmiermittelreservoir und/oder die Dosiereinrichtung können hierbei vollständig oder zumindest teilweise in dem betreffenden Gehäuse angeordnet sein. Hierdurch kann sich gegebenenfalls eine leichtere Integration in bestehende Systeme bzw. Maschinen ergeben.

Bei einer solchen Dosiervorrichtung gemäß einem Ausführungsbeispiel können das Schmiermittelreservoir und die Dosiereinrichtung jeweils einen Anschluss für eine Rohrleitung aufweisen, um den Auslass des Schmiermittelreservoirs mit der Dosierungseinrichtung über eine Rohrleitung verbindbar zu machen, wobei die Anschlüsse für die Rohrleitung ausgebildet sind, um eine hohlzylinderförmige Rohrleitung mit einem Außen- und einem Innendurchmesser aufnehmen zu können. Bei einer solchen Dosiervorrichtung gemäß einem Ausführungsbeispiel können der Auslass des Schmiermittelreservoirs und die Dosiereinrichtung optional mit einer Rohrleitung strömungsmäßig gekoppelt sein, wobei die Rohrleitung wenigstens an einem dem Auslass des Schmiermittelreservoirs zugewandten Ende und an einem der Dosiereinrichtung zugewandten Ende hohlzylinderförmig ausgestaltet ist.

Durch das Vorsehen von Anschlüssen für eine Rohrleitung können so das Schmiermittelreservoir und die Dosiereinrichtung mittels einer Rohrleitung verbunden werden. Die Rohrleitung ist hierbei zumindest abschnittsweise, insbesondere im Bereich der Anschlüsse hohlzylindrisch mit einem Innen- und einem Außendurchmesser ausgebildet. Die Innen- und Außendurchmesser sind hierbei der zu transportierenden Schmierstoffmenge und/oder der herrschenden Druckverhältnisse, also beispielsweise dem Druck des Schmiermittels im Schmierstoffreservoir angepasst. So können beispielsweise Außendurchmesser zwischen etwa 2 mm und etwa 20 mm zum Einsatz kommen. Bei anderen Ausführungsbeispielen liegt der obere Wert des Außendurchmessers gegebenenfalls darunter, beispielsweise bei 15 mm, 10 mm, 8 mm oder 5 mm. So kann beispielsweise ein Anschluss für eine Rohrleitung mit einem Außendurchmesser von 2.5 mm vorgesehen sein.

Die Innendurchmesser ergeben sich aus einer Differenz des Außendurchmessers und einem Zweifachen einer Wandstärke der Rohrleitung. Je nach Außendurchmesser können so die Wandstärken der Rohrleitungen zwischen 0.1 mm und 5 mm liegen. Je nach verwendetem Außendurchmesser, Einsatzbedingungen und Anwendungsgebiet können der Minimalwert und der Maximalwert der Wandstärken unabhängig voneinander variieren, sofern sich nicht ein verschwindender (Wert 0) oder gar rein rechnerisch negativer Innendurchmesser ergeben würde. Sowohl als Minimalwerte als auch als Maximalwerte kommen daher unter anderem 0.2 mm, 0.3 mm, 0.5 mm, 0.8 mm, 1 mm, 1.2 mm, 1.5 mm und 2 mm vor.

Eine Rohrleitung ist hierbei zumindest entlang der Rohrleitung abschnittsweise aus einem Material gefertigt, das bei den anliegenden Drücken keine bzw. eine vernachlässigbare Änderung des Innen- und/oder des Außendurchmessers aufweist, sodass durch durch einen gegebenenfalls in der Rohrleitung auftretenden Druckabfall oder Druckanstieg keine bzw. nur eine vernachlässigbare Änderung eines Innenvolumens der Rohrleitung erfolgt. Vernachlässigbar kann eine Änderung beispielsweise dann sein, wenn sie bezogen auf einen durchschnittliche oder die kleinste Schmiermittelmenge geringer als 25%, geringer als 10%, geringer als 5%, geringer als 2%, geringer als 1%, geringer als 0.5%, geringer als 0.2% oder geringer als 0.1% ist, um eine Versorgung des Mikroventils mit dem Schmiermittel zuverlässig zu ermöglichen.

Abschnittsweise kann auch eine Schlauchleitung eingesetzt werden, soweit eine gewisse Flexibilität erforderlich ist und keine oder nur eine vernachlässigbare Änderung eines Innenvolumens der Schlauchleitung bzw. des betreffenden Abschnitts durch eine geeignete Materialwahl der Schlauchleitung sichergestellt wird.

Eine Dosiervorrichtung gemäß einem Ausführungsbeispiel kann ferner eine Steuerschaltung aufweisen, wobei das Mikroventil ausgebildet ist, um auf ein Steuersignal hin die vorbestimmte Schmiermittelmenge abzugeben, wobei die Steuerschaltung mit dem Mikroventil derart gekoppelt und ausgebildet ist, um das Steuersignal an das Mikroventil auszugeben. Weist die Dosiervorrichtung ferner einen Durchflusssensor auf, kann die Steuerschaltung optional auch mit diesem gekoppelt und ausgebildet sein, um das Sensorsignal von dem Durchflusssensor zu empfangen, und um das Steuersignal basierend auf dem Sensorsignal bereitzustellen. So kann die Steuerschaltung beispielsweise die Abgabedauer oder auch eine Öffnungsdauer oder eine Verschlussdauer des Mikroventils auf Basis des Sensorsignals bestimmen.

Weist die Dosiervorrichtung optional einen Füllstandsensor und/oder einen Drucksensor auf, kann die Steuerschaltung optional dazu ausgebildet sein, das Steuersignal auch auf Basis dieses oder dieser Sensorsignale bereitzustellen oder auszugeben. Zeigt beispielsweise das Sensorsignal an, dass keine ausreichende Schmiermittelmenge in dem Schmiermittelreservoir vorhanden ist, also beispielsweise ein unterer Schwellenwert der Vorratsmenge unterschritten wird, oder der Druck, unter dem das Schmiermittel von dem Schmiermittelreservoir abgegebene wird, einen Schwellenwert unterschreitet, kann ein gegebenenfalls ein Steuersignal auf Basis dieses Sensorsignals unterbleiben oder zurückgehalten werden.

Optional kann die Steuerschaltung ein Fehlersignal bereitstellen oder ausgeben, welches eine Information aufweisen kann, dass ein Fehler oder eine Störsituation vorliegt. Optional kann die Steuerschaltung ebenso das Fehlersignal derart ausgeben, dass dieses eine Information aufweist, was für eine Störung oder welcher Fehler vorliegt.

Die Steuerschaltung kann als eigenständige Komponente der Dosiervorrichtung räumlich getrennt von dem Schmiermittelreservoir und/oder von dem Mikroventil ausgeführt sein. Sie kann jedoch ebenso als Teil einer Dosiereinrichtung, die ebenfalls das Mikroventil umfasst, oder aber auch als Teil des Schmiermittelreservoirs implementiert sein. Die Steuerschaltung kann auch als Teil einer Maschine, beispielsweise als Teil einer Werkzeugmaschine, als SPS- bzw. PLC-Schaltung oder als separater Steuerrechner ausgeführt sein (SPS = Speicherprogrammierbare Steuerung = (engl.) Programmable Logic Controller = PLC).

Bei einem Schmiermittelsystem gemäß einem Ausführungsbeispiel kann das Maschinenteil ein Wälzlager, ein Gleitlager, ein Linearwälzlager oder ein Lineargleitlager umfassen, wobei das Maschinenteil eine Bohrung in einer Laufbahn oder einer Gleitbahn aufweist, wobei die Bohrung mit dem Mikroventil strömungsmäßig gekoppelt ist, um die vorbestimmte Schmiermittelmenge definiert an die Laufbahn oder die Gleitbahn abzugeben. Die Laufbahn oder Gleitbahn kann beispielsweise die eines Innen- oder eines Außenrings eines Wälzlagers, aber auch die eines Profilschienenwagens oder einer Profilschiene sein.

Die Bohrung kann hierbei an der Laufbahn oder der Gleitbahn des Wälzlagers, des Gleitlagers, des Linearwälzlagers oder des Lineargleitlagers eine Senkung, beispielsweise eine Profilsenkung aufweisen, um eine Oberflächenbeschaffenheit der Laufbahn oder Gleitbahn, eine Gleiteigenschaft des Gleitlagers oder des Lineargleitlagers oder eine Abrolleigenschaft der Wälzkörper auf der Laufbahn des Wälzlagers oder des Linearwälzlagers zu verbessern. Neben einer Senkung kann die Gleit- oder Laufbahn aber auch andere Entgratung aufweisen.

Bei einem Schmiermittelsystem gemäß einem Ausführungsbeispiel kann das Mikroventil mit dem Maschinenteil über ein durchgängiges Leitungssystem gekoppelt sein, das bei einer Abgabe der vorbestimmten Schmiermittelmenge keine oder nur eine vernachlässigbare Änderung eines Volumens des Leitungssystems (Innenvolumen) aufweist. Das durchgängige Leitungssystem kann so beispielsweise aus einem oder mehreren Materialien gefertigt sein, die unter Berücksichtigung der anliegenden Drücke keine oder nur eine vernachlässigbare Änderung des Volumens des Leitungssystems aufweisen. Vernachlässigbar kann eine Änderung beispielsweise dann sein, wenn sie bezogen auf einen durchschnittliche oder die kleinste Schmiermittelmenge geringer als 25%, geringer als 10%, geringer als 5%, geringer als 2%, geringer als 1%, geringer als 0.5%, geringer als 0.2% oder geringer als 0.1% ist.

Das durchgängige Leitungssystem kann hierbei mehrteilig ausgeführt sein. So kann es beispielsweise einen oder mehrere Rohrleitungsabschnitte, einen oder mehrere Schlauchabschnitte oder in einem größeren Werkstück in Form von Bohrungen ausgeführte Leitungen aufweisen. Hierbei kann es sich beispielsweise um eine Kapillarleitung handeln.

Das durchgängige Leitungssystem weist jedoch keinen Abschnitt auf, bei dem das Schmiermittel über einen Spalt hinweg transportiert wird. Insbesondere weist ein solches Leitungssystem keine Düse auf, über die das Schmiermittel auf das zu schmierende Maschinenteil gespritzt wird.

Hierdurch kann eine Abgabe der vorbestimmten Schmiermittelmenge gegebenenfalls verbessert werden, da in Anbetracht der kleinen Volumina bereits kleine Änderungen des Innenvolumens des Leitungssystems nachteilig für die Genauigkeit sein können.

So kann bei einem Schmiermittelsystem gemäß einem Ausführungsbeispiel der Auslass des Schmiermittelreservoirs mit dem Mikroventil strömungsmäßig über ein Leitungssystem gekoppelt ist, das bei einer Abgabe der vorbestimmten Schmiermittelmenge keine oder nur eine vernachlässigbare Änderung eines Volumens des Leitungssystems (Innenvolumen) aufweist.

Bei einem Schmiermittelsystem gemäß einem Ausführungsbeispiel kann die Dosiervorrichtung eine Dosiereinrichtung umfassen, wobei die Dosiereinrichtung das Mikroventil umfasst, und wobei das Schmiermittelreservoir räumlich getrennt von der Dosiereinrichtung angeordnet ist. Bei einem solchen Ausführungsbeispiel kann das Mikroventil möglichst nahe an einem zu schmierenden Maschinenteil einer Maschine angeordnet werden. Hierdurch können Zuleitungswege, in denen aufgrund von Leckagen oder anderen unerwünschten Effekten Schmiermittel verloren geht, verkürzt werden, sodass eine Schmiermittelversorgung mit einer verbesserten Genauigkeit erreichbar ist. Das Schmiermittelreservoir kann an einem anderen Platz angebracht werden, an dem gegebenenfalls mehr Bauraum zur Verfügung steht. Bei einem solchen Schmiermittelsystem gemäß einem Ausführungsbeispiel kann die Dosiereinrichtung von dem Schmiermittelreservoir räumlich mit einem Abstand getrennt ist, wobei der Abstand wenigstens 0.50 m beträgt.

Bei einem Schmiermittelsystem gemäß einem Ausführungsbeispiel kann die Dosiervorrichtung so nicht nur als eine einzige Systemkomponente ausgeführt sein. Sie kann vielmehr auch mit räumlich trennbaren Einzelkomponenten ausgeführt werden, sodass bei dem Schmiermittelsystem die Dosiereinrichtung und das Schmiermittelreservoir räumlich getrennt sind. Der Abstand zwischen diesen kann wenigstens 0.5 m, wenigstens 1 m, wenigstens 2 m, wenigstens 5 m oder wenigstens 10 m betragen. Hierdurch kann eine leichtere Anpassung des Schmiermittelsystems an konstruktive, bauliche, organisatorische oder gesetzliche Randbedingungen möglich sein.

Bei einem Schmiermittelsystem gemäß einem Ausführungsbeispiel kann das Schmiermittelreservoir in einem Gefahrstoffraum, einem Gefahrstoffschrank, einem Schmierstoffraum oder einem Schmierstoffschrank angeordnet sein. Ein Beispiel für einen Schmierstoff- oder Gefahrstoffschrank stellt so beispielsweise ein Ölschrank dar. Hierdurch kann eine leichtere Anpassung des Schmiermittelsystems an bauliche, organisatorische oder gesetzliche Randbedingungen möglich sein.

Bei einem Schmiermittelsystem gemäß einem Ausführungsbeispiel kann das Maschinenteil ein Hochgeschwindigkeitslager oder ein Lager einer Spindel sein, wobei das Lager der Spindel ausgebildet ist, um eine Drehzahl von wenigstens 20000 U/min zu ermöglichen. Das Lager der Spindel kann ferner ausgestaltet sein, um Drehzahlen von wenigstens 40.000 U/min oder wenigstens 60.000 U/min zu ermöglichen. Bei einer solchen Maschine kann es sich beispielsweise um eine Werkzeugmaschine handeln. Aber auch im Fall eines Hochgeschwindigkeitslagers kann dieses ausgebildet sein, um eine Drehzahl von wenigstens 20000 U/min, von wenigstens 40.000 U/min oder wenigstens 60.000 U/min zu ermöglichen.

Ein Ausführungsbeispiel kann auch in Form eines Programms mit einem Programmcode zur Durchführung eines Ausführungsbeispiels eines Verfahrens implementiert werden, wenn das Programm auf einer programmierbaren Hardwarekomponente abläuft.

Nachfolgend werden unter Bezugnahme auf die beiliegenden Figuren Ausführungsbeispiele näher beschrieben und erläutert.
Fig. 1 zeigt einen Hydraulikplan einer Dosiervorrichtung gemäß einem Ausführungsbeispiel;
Fig. 2 zeigt eine Querschnittsdarstellung eines Mikroventils einer Dosiervorrichtung gemäß einem Ausführungsbeispiel in einem geschlossenen Zustand;
Fig. 3 zeigt eine Querschnittsdarstellung des Mikroventils in einem geöffneten Zustand;
Fig. 4 zeigt einen zeitlichen Verlauf eines Steuersignals für das Mikroventil;
Fig. 5 zeigt einen Hydraulikplan einer Dosiervorrichtung gemäß einem weiteren Ausführungsbeispiel;
Fig. 6 zeigt eine Querschnittsdarstellung eines Durchflusssensors;
Fig. 7 zeigt eine Querschnittsdarstellung eines Schmiermittelreservoirs einer Dosiervorrichtung gemäß einem Ausführungsbeispiel;
Fig. 8 zeigt eine Konzeptdarstellung einer Dosiereinrichtung einer Dosiervorrichtung gemäß einem Ausführungsbeispiel,
Fig. 9 zeigt eine erste Querschnittsdarstellung einer Dosiereinrichtung einer Dosiervorrichtung gemäß einem Ausführungsbeispiel;
Fig. 10 zeigt eine zweite Querschnittsdarstellung der Dosiereinrichtung aus Fig. 9;
Fig. 11 zeigt eine dritte Querschnittsdarstellung der Dosiereinrichtung aus Fig. 9;
Fig. 12 zeigt einen Hydraulikplan einer Dosiervorrichtung gemäß einem weiteren Ausführungsbeispiel;
Fig. 13 zeigt einen Hydraulikplan einer Dosiervorrichtung gemäß einem weiteren Ausführungsbeispiel;
Fig. 14 zeigt eine Aufrissdarstellung einer Werkzeugmaschine gemäß einem Ausführungsbeispiel; und
Fig. 15 zeigt eine Außenansicht einer Dosiervorrichtung gemäß einem Ausführungsbeispiel.

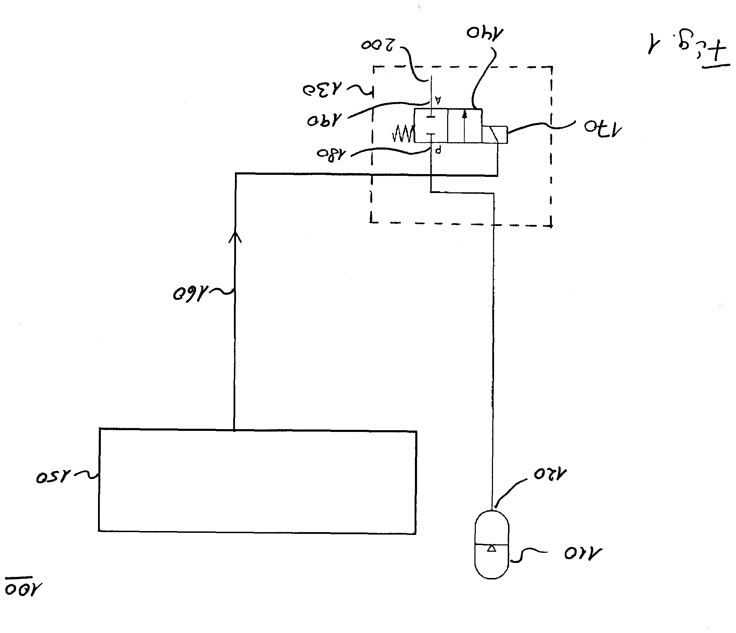

Bevor im Zusammenhang mit den Figuren 1 bis 15 Ausführungsbeispiele näher beschrieben und hinsichtlich ihrer Funktionsweise näher erläutert werden, bietet es sich an, darauf hinzuweisen, dass im Rahmen der vorliegenden Beschreibung zusammenfassende Bezugszeichen für Objekte, Strukturen und andere Entitäten verwendet werden, wenn auf die betreffende Entität an sich, mehrerer entsprechende Entitäten innerhalb eines Ausführungsbeispiels oder innerhalb mehrerer Ausführungsbeispiele oder die betreffende Gattung von Entitäten näher eingegangen wird. Hierdurch ist es möglich, die Beschreibung knapper und kürzer zu halten, da unnötige Wiederholungen vermieden werden können, da Beschreibungen die sich auf eine Entität beziehen, auch auf andere Entitäten in anderen Ausführungsbeispielen übertragbar sind, soweit dies nicht explizit anders angegeben ist oder sich aus dem Zusammenhang ergibt. Im Unterschied hierzu werden, wenn einzelne Entitäten bezeichnet werden, individuelle Bezugszeichen verwendet, die auf den entsprechenden zusammenfassenden Bezugszeichen basieren. Entitäten, die mehrfach in einem Ausführungsbeispiel oder in unterschiedlichen Ausführungsbeispielen auftreten, können hierbei bezüglich einiger ihrer technischen Parameter identisch und/oder unterschiedlich ausgeführt werden. Es ist so beispielsweise möglich, dass mehrere Entitäten innerhalb eines Ausführungsbeispiels bezüglich eines Parameters identisch, bezüglich eines anderen Parameters jedoch unterschiedlich ausgeführt sein können.

Fig. 1 zeigt einen Hydraulikplan einer Dosiervorrichtung 100 gemäß einem Ausführungsbeispiel. Die Dosiervorrichtung zum Abgeben einer vorbestimmten Schmiermittelmenge umfasst so ein Schmiermittelreservoir 110, das ausgebildet ist, ein Schmiermittel aufzunehmen und über einen Auslass 120 des Schmiermittelreservoirs 110 unter Druck abzugeben. Die Dosiervorrichtung weist neben dem Schmiermittelreservoir 110 ferner eine Dosiereinrichtung 130 auf, die auch als Dosiereinheit bezeichnet wird. Die Dosiereinrichtung 130 umfasst ein Mikroventil 140, das eingangseitig mit dem Auslass 120 des Schmiermittelreservoirs 110 strömungsmäßig gekoppelt ist. Das Mikroventil 140 ist ferner ausgebildet, um die vorbestimmte Schmiermittelmenge definiert abzugeben. Die Dosiervorrichtung 100 umfasst ferner eine optionale Steuerschaltung 150, die auch als Elektronikeinheit bezeichnet wird. Die Steuerschaltung 150 ist hierbei mit dem Mikroventil 140 der Art gekoppelt, sodass die Steuerschaltung 150 ein Steuersignal an das Mikroventil 140 ausgeben kann. Zu diesem Zweck ist die Steuerschaltung 150 über eine Steuersignalleitung 160 mit einem Anschluss eines Aktuators 170 des Mikroventils 140 gekoppelt.

Der Auslass 120 des Schmiermittelreservoirs 110 ist hierbei mit einem ersten Anschluss 180 des Mikroventils 140 strömungsmäßig gekoppelt, sodass das Schmiermittel, das von dem Schmiermittelreservoir 110 unter Druck abgegeben wird, an dem ersten Anschluss 180 (Einlass) des Mikroventils 140 anliegt. Ein zweiter Anschluss 190 des Mikroventils 140 ist mit einem Anschluss 200 für eine Rohrleitung strömungsmäßig gekoppelt.

Das Mikroventil 140 ist hierbei als Sperrventil bzw. 2/2-Ventil ausgestaltet, welches über zwei Anschlüsse 180, 190 verfügt und zwei Schaltzustände bzw. Zustände annehmen kann. Die beiden Zustände sind einmal ein vollständig geöffneter Zustand und andererseits ein vollständig geschlossener Zustand. Das Mikroventil 140, wie es in Fig. 1 gezeigt ist, ist hierbei derart ausgestaltet, dass im Falle eines Ausbleibens eines Steuersignals über die Steuersignalleitung 160 sich dieses in dem vollständig geschlossenen Zustand befindet.

Der Anschluss 200 für die Rohrleitung ist hierbei ausgebildet, um eine hohlzylinderförmige Rohrleitung mit einem Außen- und einem Innendurchmesser aufnehmen zu können.

Als Schmiermittel kommen grundsätzlich alle flüssigen Schmiermittel, also beispielsweise Öl infrage. Aber auch andere Schmiermittel mit einer hinreichend niedrigen Viskosität (z. B. niederviskose Fette) können mithilfe einer Dosiervorrichtung 100 gemäß einem Ausführungsbeispiel dosiert werden.

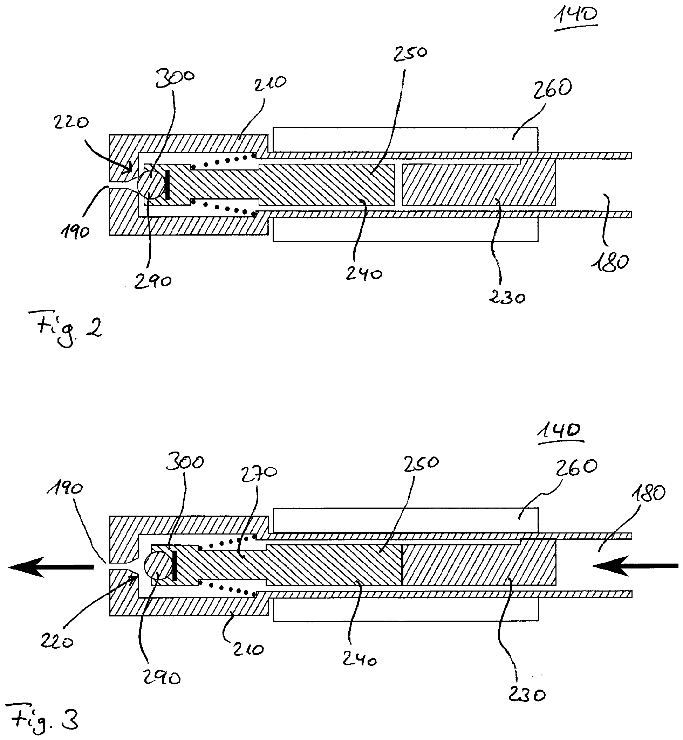

Fig. 2 zeigt eine Querschnittsdarstellung des Mikroventils 140 in einem ersten Zustand, bei dem das Mikroventil 140 vollständig geschlossen ist. Im Unterschied hierzu zeigt Fig. 3 das Mikroventil 140 in einem vollständig geöffneten Zustand. Das Mikroventil 140 weist ein Gehäuse 210 mit einem Ventilsitz 220 auf, der sich in dem Bereich des zweiten Anschlusses 190 des Mikroventils 140 befindet. Der zweite Anschluss 190 ist hier als Düse ausgestaltet.

In einem Inneren des Mikroventils 140 ist ein stationärer Anker 230 angeordnet und mit dem Gehäuse 210 mechanisch stabil verbunden. Das Mikroventil 140 weist ferner einen mobilen Anker 240 auf, der zumindest mit einem ersten Abschnitt 250 benachbart zu dem stationären Anker 230 in dem Inneren des Mikroventils 140 angeordnet ist. Das Gehäuse 210 ist hierbei rotationssymmetrisch als Zylinder ausgestaltet und von einer Spule 260 zumindest in einem Bereich umgeben, indem zumindest teilweise der stationäre Anker 230 und der erste Abschnitt 250 des mobilen Ankers 240 angeordnet sind. Zumindest der erste Abschnitt 250 des mobilen Ankers 240 ist hierbei aus einem magnetischen Material, beispielsweise einem ferromagnetischen Material gefertigt, sodass über die Spule 260 auf diesen eine magnetische Kraft ausübbar ist.

Der mobile Anker 240 weist ferner einen zweiten Abschnitt 270 auf, der sich gegenüber dem ersten Abschnitt 250 verjüngt. Eine Feder 280 (Druckfeder) ist hierbei zwischen einer Anschlagfläche des Gehäuses 210 und einer Anschlagfläche des zweiten Abschnitts 270 des mobilen Ankers 240 der Art angeordnet und vorgespannt, sodass durch die Feder 280 der mobile Anker 240 in Richtung des Ventilsitzes 220 gedrückt wird.

Der mobile Anker 240 weist ferner als Dichtkörper eine Rubinkugel 290 auf, die über einen Kugelhalter 300 mit dem zweiten Abschnitt 270 des mobilen Ankers 240 mechanisch gekoppelt bzw. verbunden ist.

Bei dem Mikroventil 140 handelt es sich um ein Miniatur-Magnetventil, welches elektromagnetisch betrieben und von dem Schmiermittel direkt durchströmt wird. In einem stromlosen Zustand wird die Rubinkugel 290 gegen den Ventilsitz 220 von der Feder 280 gepresst. In dem stromlosen Zustand ist also das Mikroventil 140 vollständig geschlossenen. Diese Situation ist in Fig. 2 dargestellt.

Der Ventilsitz 220 kann hierbei beispielsweise aus einem harten Material, beispielsweise aus Saphir gefertigt sein.

Das Mikroventil 140 öffnet bei Bestromung der Spule 260, da es infolge des erzeugten Magnetfeldes zu einer gegenseitigen Anziehung der beiden Anker 230, 240 kommt.

Die während eines Öffnungszyklus dosierte Schmiermittelmenge wird in Abhängigkeit von dem Druck des Schmiermittels und der Dauer des angelegten Stromimpulses bestimmt, der der Spule 260 aufgeprägt wird und im vorliegenden Fall das Steuersignal darstellt. Anders ausgedrückt wird die durch den zweiten Anschluss 190 abgegebene Schmiermittelmenge einerseits durch den Druck und andererseits durch die Dauer des an die Spule 260 angelegten Spannungsimpulses bestimmt.

Für das Gehäuse 210 sowie für die beiden Anker 230, 240 sind entsprechende Materialien verwendet worden, die eine hohe chemische Beständigkeit gegenüber dem verwendeten Schmiermittel aufweisen. Als Materialien kommt beispielsweise für die beiden Anker 230, 240 sowie für das Gehäuse Edelstahl infrage. Die Ventilkugel kann beispielsweise aus Rubin gefertigt sein (Rubinkugel 290) während der Ventilsitz 220 aus Saphir gefertigt sein kann.

Diese Materialkombination für die Anker 230, 240 und das Gehäuse 210 ermöglicht es so nicht nur eine hohe chemische Beständigkeit zu erzielen, sondern ebenfalls kurze Ansprechzeiten, sodass sehr kurze Öffnungszeiten und Schließzeiten des Mikroventils 140 realisierbar sind.

In dem Ventilbereich erlauben es die genannten Materialien beispielsweise, kleinste Öffnungshübe von weniger als 1/100 mm zu erzielen und dabei gleichzeitig eine extrem hohe Verschleißfestigkeit zu ermöglichen, die eine dauerhaft stabile Ventilgeometrie zur Folge hat.

Hierdurch ist es möglich, das Mikroventil 140 sehr klein bauend mit einem sehr geringen Innenvolumen (z.B. 25 µl) auszugestalten. Aufgrund des geringen Ventilhubs ergeben sich typische Ansprechzeiten, die im Bereich weniger 100 µs (z.B. 200 µs) liegen und so maximale Dosierfrequenzen von bis zu mehreren Kilohertz (z.B. etwa 3 kHz) ermöglichen. Hierdurch können sich kleinste, von dem Mikroventil 140 abgebbare Schmiermittelmengen ergeben, die im Bereich der zuvor oben genannten Werte liegen. Beispielsweise kann es sogar möglich sein, unter Verwendung eines entsprechend niederviskosen Schmiermittels bei einem einmaligen Öffnungspuls von 150 µs eine minimale Schmiermittelmenge von gegebenenfalls nur 20 nl (bei einem Druck von 1 bar) oder 50 nl zu erzielen. Welche minimalen Schmiermittelmenge realisierbar sind, hängt nicht zuletzt von einer Vielzahl von Faktoren ab, die beispielsweise auch eine Viskosität des betreffenden Schmiermittels umfassen. Je nach konkreter Ausgestaltung können hier gegebenenfalls sehr hohe Wiederholungsgenauigkeiten mit Abweichungen im einstelligen Prozentbereich oder darunter (z. B. weniger als 0.2%) erzielt werden.

Das Mikroventil 140 ist hierbei geschlossen, wenn die Spule 260 stromlos geschaltet ist. Ist die Spule 260 hingegen bestromt, das Mikroventil 140 also geöffnet, können sich maximale Durchflussmengen von mehreren Millilitern pro Minute ergeben (z.B. 8 ml/min bei einem Druck des Schmiermittels von 1 Bar und einer entsprechend niedrigen Viskosität).

Optional kann das Mikroventil 140 selbstverständlich ebenfalls noch mit Filterelementen ausgerüstet werden, um ein Verstopfen des Mikroventils 140 zu unterbinden. Andere Bauformen für Mikroventile 140 können ebenfalls eingesetzt werden, wie sie beispielsweise im Bereich der Medizin- oder Wassertechnik verwendet werden können.

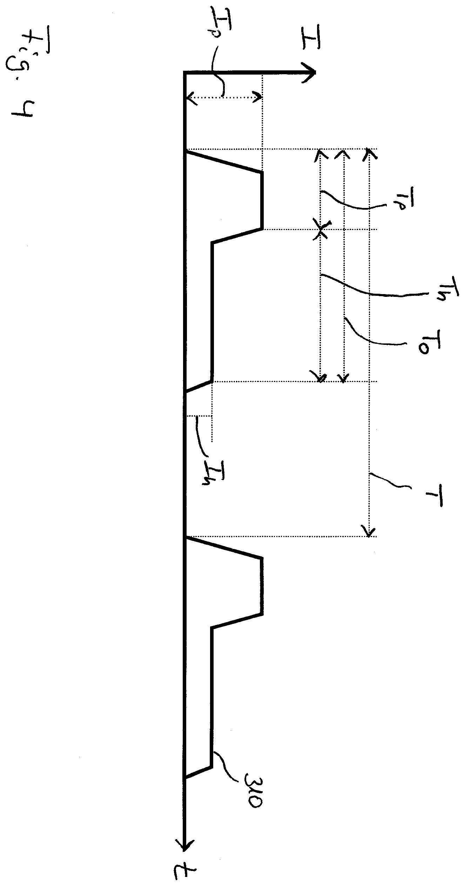

Fig. 4 zeigt einen zeitlichen Verlauf 310 eines Steuersignals, bei dem es sich bei dem in Fig. 4 gezeigten Verlauf um einen über die Zeit t aufgetragenen Strom I handelt. Das Steuersignal ist hierbei über die Zeit periodisch mit einer Periodendauer oder Taktzeit T ausgebildet. Eine Ventilöffnungszeit To ist hierbei geringer als die Taktzeit T. Aus einer Differenz der Taktzeit T und der Ventilöffnungszeit To ergibt sich die Schmierpause.

Um ein sicheres Öffnen des Mikroventils 140 zu gewährleisten, wird über eine Spitzenzeit Tp unmittelbar bei dem Öffnen des Mikroventils 140, also zu Beginn der Ventilöffnungszeit To ein Spitzenstrom Ip als Steuersignal dem Aktuators 140, also der Spule 260 des Mikroventils 140 aufgeprägt. Nach dem Verstreichen der Zeit Tp wird für eine Haltezeit Th ein Haltestrom Ih der Spule 260 bzw. dem Aktuator 170 des Mikroventils 140 aufgeprägt, der derart bemessen ist, dass der mobile Anker 240 sicher in dem geöffneten Zustand gehalten wird. Im Unterschied hierzu ist der Spitzenstrom Ip der Art ausgewählt, dass der mobile Anker 240 aus seiner Position in dem geschlossenen Zustand möglichst rasch wegbewegt wird, dass also die Rubinkugel 290 sich von dem Ventilsitz 220 sicher löst. Der Halterstrom Ih ist hierbei geringer als der Spitzenstrom Ip, um ein unnötiges Erwärmen der Spule 260 bzw. des Mikroventils 140 zu verhindern.

Die Ventilöffnungszeit To ergibt sich so als Summe der Spitzenzeit Tp und der Haltezeit Th, wie dies auch in Fig. 4 gezeigt ist. Diese Zeiten liegen häufig im Bereich einiger 100 µs, während die zugehörigen Ströme im Bereich einiger 100 mA liegen.

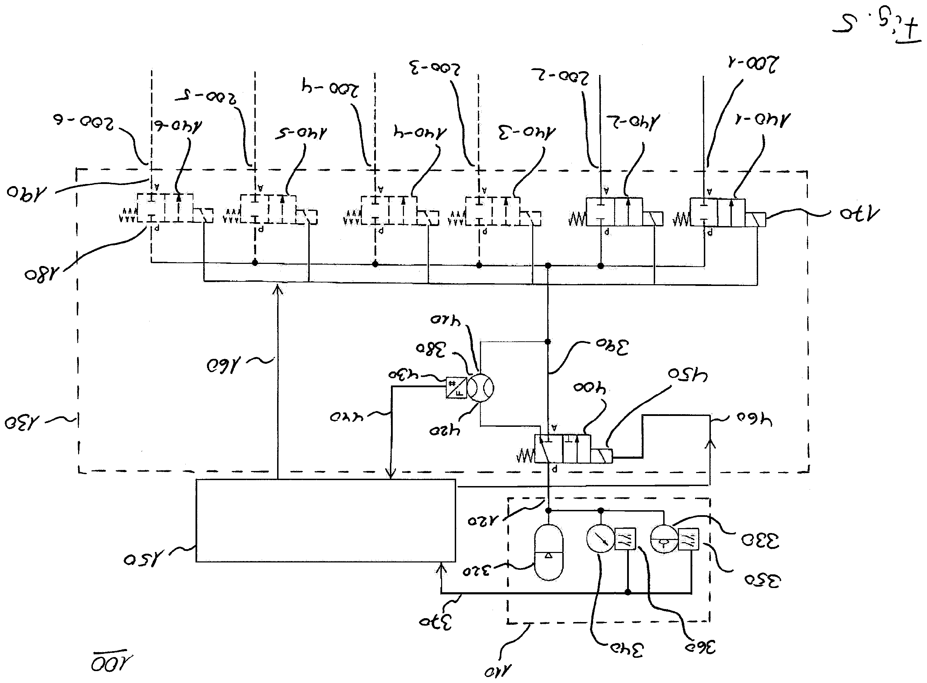

Fig. 5 zeigt einen Hydraulikplan einer Dosiervorrichtung 100 gemäß einem weiteren Ausführungsbeispiel. Auch die in Fig. 5 gezeigte Dosiervorrichtung 100 umfasst wiederum ein Schmiermittelreservoir 110 sowie eine Dosiereinrichtung 130. Das Schmiermittelreservoir 110 umfasst einen Behälter 320, der das eigentliche Schmiermittel aufnimmt, sowie einen optionalen Füllstandsensor 330 und einen optionalen Drucksensoren 340. Sowohl der Füllstandsensor 330 als auch der Drucksensor 340 sind mit dem Auslass 120 des Schmiermittelreservoirs 110 strömungsmäßig gekoppelt. Der Füllstandsensor 330 sowie der Drucksensor 340 können selbstverständlich auch in einem Inneren des Behälters 320 angeordnet sein.

Der Füllstandsensor 330 umfasst eine Sensorschaltung 350, die mit der Steuerschaltung 150 in der Art gekoppelt ist, sodass diese Sensorschaltung 350 an die Steuerschaltung 150 ein Sensorsignal übermitteln kann, welches eine Information hinsichtlich einer Vorratsmenge des Schmiermittels in dem Schmiermittelreservoir 110 bzw. seinem Behälter 320 umfasst.

Entsprechend weist auch der Drucksensoren 340 eine Sensorschaltung 360 auf, die derart ausgebildet und mit der Steuerschaltung 150 gekoppelt ist, sodass auch diese ein Sensorsignal an die Steuerschaltung 150 übermitteln kann, welches eine Information hinsichtlich eines Drucks des Schmiermittels in dem Schmiermittelreservoir 110 bzw. in dem Behälter 320 oder dem Auslass 120 umfasst.

Die Sensorschaltungen 350, 360 sind hierbei mit der Steuerschaltung 150 über eine Sensorsignalleitung 370 gekoppelt. Hierbei kann es sich, ähnlich der Steuersignalleitung 160 aus Fig. 1, um eine optische, elektrische oder andersgeartete Signalleitung handeln. Auch können die beiden Sensoren 330, 340 über eine gemeinsame Sensorsignalleitung 370 oder über unterschiedliche Sensorsignalleitungen mit der Steuerschaltung 150 gekoppelt sein. Im Falle einer gemeinsamen Sensorsignalleitung 370 kann so beispielsweise eine Kommunikation mit der Steuerschaltung über ein entsprechendes Kommunikationsprotokoll (z. B. TCP/IP) erfolgen.

Die Dosiereinrichtung 130 umfasst im Unterschied zu dem in Fig. 1 gezeigten Ausführungsbeispiel eine Mehrzahl von Mikroventilen 140-1, 140-2, ..., 140-6. Hierbei kann bei unterschiedlichen Ausführungsbeispielen einer Dosiervorrichtung 100 die genaue Anzahl der Mikroventile 140 unterschiedlich sein. So kann ein entscheidendes Ausführungsbeispiel beispielsweise ein einziges Mikroventil 140, jedoch auch mehrere Mikroventile 140, also beispielsweise zwei Mikroventile, drei Mikroventile, vier Mikroventile oder mehr umfassen. Aus diesem Grund sind in Fig. 5 lediglich die ersten beiden Mikroventile 140-1 und 140-2 mit durchgezogenen Linien dargestellt, während die weiteren vier Mikroventile 140-3, ..., 140-6 als optionale Mikroventile gestrichelt dargestellt sind. Auch kann gegebenenfalls bei Ausführungsbeispielen die Dosiereinrichtung 130 derart ausgebildet sein, dass diese mit weiteren Mikroventilen 140 nachrüstbar oder erweiterbar ist.

Die Mikroventile 140 sind jeweils mit einem ersten Anschluss 180 strömungsmäßig mit dem Auslass 120 des Schmiermittelreservoirs gekoppelt. Zur Vereinfachung der Darstellung ist der erste Anschluss 180 lediglich im Zusammenhang mit dem Mikroventil 140-6 eingezeichnet und als solcher bezeichnet. Entsprechend weisen die Mikroventile 140 jeweils ebenfalls einen zweiten Anschluss 190 auf, der jedoch lediglich im Zusammenhang mit dem Mikroventil 140-6 als solcher mit einem Bezugszeichen gekennzeichnet ist. Die jeweiligen zweiten Anschlüsse 190 sind mit entsprechenden Anschlüssen für Rohrleitungen 200-1, ..., 200-6 strömungsmäßig gekoppelt, um das Schmiermittel an eine Rohrleitung oder ein anderes Leitungssystem abgeben zu können.

Auch bei diesem Ausführungsbeispiel sind die Aktuatoren 170 der Mikroventile 140 über eine Steuersignalleitung 160 mit der Steuerschaltung 150 der Art gekoppelt, dass diese ein Steuersignal von der Steuerschaltung 150 empfangen können. Zur Vereinfachung der Darstellung in Fig. 5 ist auch hier lediglich der Aktuator 170 eines einzigen Mikroventils, nämlich des Mikroventils 140-1 als solches mit einem Bezugszeichen gekennzeichnet.

Die ersten Anschlüsse 180 der Mikroventile 140 sind bei dem in Fig. 5 gezeigten Ausführungsbeispiel einer Dosiervorrichtung 100 jeweils mit einem Durchflusssensor 380 und über eine Umgehungsleitung 390 mit einem Auslass eines Umgehungsventils 400 strömungsmäßig gekoppelt. Genauer gesagt sind die ersten Anschlüsse 180 der Mikroventile mit einem zweiten Anschluss 410 des Durchflusssensors 380 strömungsmäßig gekoppelt, wobei der zweite Anschluss 410 bei der in Fig. 5 gezeigten Dosiervorrichtung 100 als Auslass des Durchflusssensors 380 dient. Ein erster Anschluss 420 des Durchflusssensors 380 ist mit einem ersten Auslass des Umgehungsventils 400 gekoppelt.

Auch die Umgehungsleitung 390 ist - wie zuvor erwähnt wurde - mit den ersten Anschlüssen 180 der Mikroventile 140 strömungsmäßig gekoppelt. Die Umgehungsleitung 390 ist darüber hinaus mit einem zweiten Auslass des Umgehungsventils 400 gekoppelt. Ein Einlass des Umgehungsventils 400 ist strömungsmäßig mit dem Auslass 120 des Schmiermittelreservoirs 110 gekoppelt.

Das Umgehungsventil ist hierbei ausgebildet, um eine strömungsmäßige Verbindung entweder mit der Umgehungsleitung 390 oder dem Durchflusssensor 380 zu schaffen. Es handelt sich also bei dem Umgehungsventil 400 um ein 3/2-Ventil mit drei Anschlüssen (einem Einlass und zwei Auslässen) und zwei Zuständen, bei denen entweder der Einlass mit dem ersten Auslass oder der Einlass mit dem zweiten Auslass des Umgehungsventils 400 strömungsmäßig gekoppelt ist. Anders ausgedrückt kann ein Durchfluss des Schmiermittels durch das Umgehungsventil 400 teilweise oder, wie im vorliegenden Fall, vollständig zwischen der Umgehungsleitung 390 und dem Durchflusssensor 380 umgeschaltet werden. Die Umgehungsleitung wird auch als Bypassleitung, das Umgehungsventil 400 auch als Bypassventil bezeichnet.

Der Durchflusssensor 380 weist eine Sensorschaltung 430 auf, die mit der Steuerschaltung 150 über eine Sensorsignalleitung 440 der Art gekoppelt ist, dass die Sensorschaltung 430 der Steuerschaltung 150 ein Sensorsignal bereitstellen kann, welches eine Information hinsichtlich einer Durchflussmenge umfasst.

Entsprechend weist auch das Umgehungsventil 400 einen Aktuator 450 auf, der mit der Steuerschaltung 150 gekoppelt ist, um ein Steuersignal, welches ein Umschalten des Umgehungsventils 400 bewirkt, über eine Steuersignalleitung 460 empfangen zu können. Die Steuerschaltung 150 versorgt den Aktuator 450 während des Betriebs der Dosiervorrichtung 100 mit dem Steuersignal.

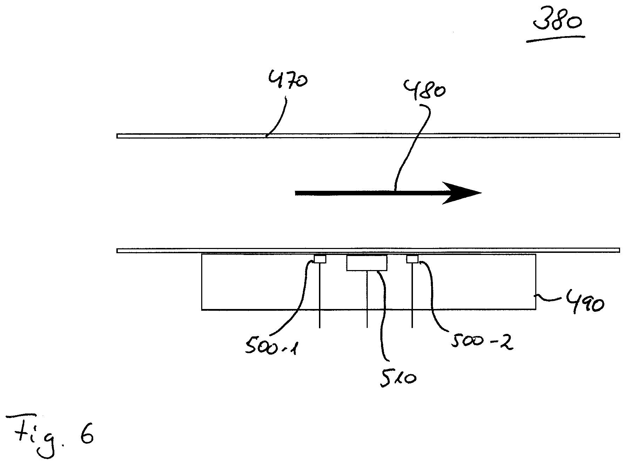

Fig. 6 zeigt eine vereinfachte Querschnittsdarstellung des Durchflusssensors 380, wie er beispielsweise im Zusammenhang mit der Dosiervorrichtung 100 aus Fig. 5 zum Einsatz kommen kann. Der Durchflusssensor 380 umfasst einen Leistungsabschnitt 470, durch den das Schmiermittel fließen kann, wie dies durch einen Pfeil 480 in Fig. 6 angedeutet ist. Außerhalb des Leitungsabschnitts 470, jedoch an diesen angrenzend, ist ein Sensorträger 490 angebracht, bei dem es sich beispielsweise um eine Leiterplatine oder auch um einen Chip (z.B. Halbleiterchip) handeln kann. Der Sensorträger 490 umfasst zwei Temperatursensoren 500-1 und 500-2, zwischen denen mittig und symmetrisch ein Heizelement 510 angeordnet ist.

Wird nun während des Betriebs des Durchflusssensors 380 das Heizelement 510 erhitzt, wird die Wärme, die das Heizelement 510 erzeugt, auch an das in dem Leitungsabschnitt 470 gegebenenfalls fließende Schmiermittel abgegeben, was diese erwärmt. Bewegt sich nun das Schmiermittel durch den Leitungsabschnitt 470, liegt also ein Durchfluss des Schmiermittels durch den Leitungsabschnitt 470 vor, werden die beiden Temperatursensoren 500-1 und 500-2 unterschiedliche Temperaturen messen. Aus einer Temperaturdifferenz zwischen den Temperaturwerten, die die beiden Temperatursensoren 500 messen, lässt sich dann unter Berücksichtigung der von dem Heizelement 510 in das Schmiermittel übertragenen Wärme eine Durchflussgeschwindigkeit aufgrund der bekannten Geometrie des Leitungsabschnitts 470 bestimmen bzw. berechnen.

Fließt im Unterschied zu dem vorgenannten Fall das Schmiermittel nicht durch den Leitungsabschnitt 470, wird sich die Wärme, die von dem Heizelement 510 abgegeben wird, symmetrisch zu beiden Seiten des Heizelements 510, also zu beiden Temperatursensoren 500 hin symmetrisch ausbreiten, sodass diese keine Temperaturdifferenz, also identische Temperaturen erfasst werden.

Lediglich der Vollständigkeit halber soll an dieser Stelle erwähnt werden, dass Fig. 6 lediglich eine vereinfachte Darstellung eines Durchflusssensors 380 zeigt, die insbesondere die Sensorschaltung 430 nicht wiedergibt. Diese kann beispielsweise ebenfalls mit auf dem Sensorträger 490 integriert sein. Selbstverständlich kann die entsprechende Sensorschaltung jedoch ebenfalls als getrennte Schaltung ausgeführt werden, die ebenfalls räumlich getrennt angeordnet sein kann.

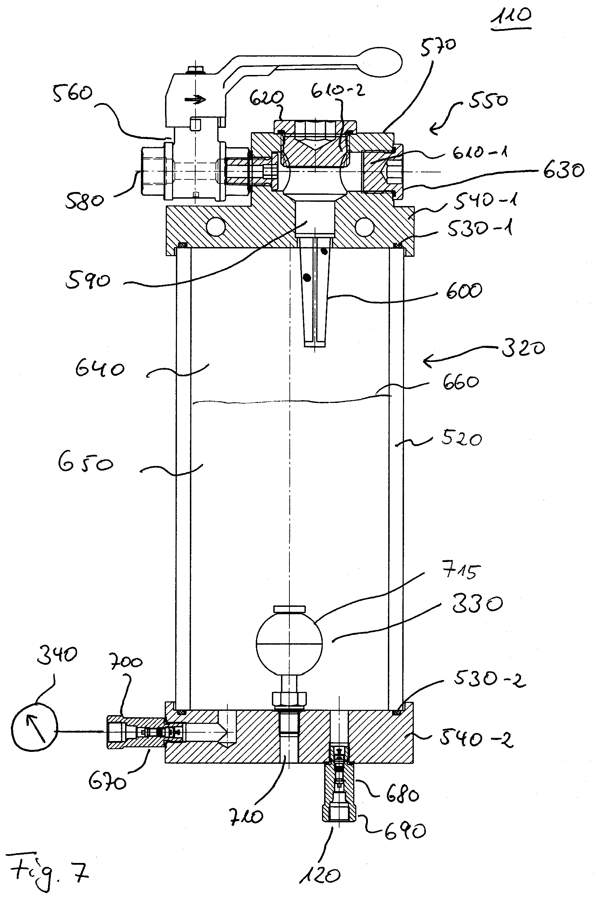

Fig. 7 zeigt eine Querschnittsdarstellung eines Schmiermittelreservoirs 110, wie es beispielsweise im Rahmen der zuvor gezeigten Ausführungsbeispiele zum Einsatz kommen kann.

Das Schmiermittelreservoir 110 umfasst einen Hohlzylinder 520, der beispielsweise aus Borsilikatglas gefertigt sein kann. An den Hohlzylinder 520 schließen sich entlang seiner Zylinderachse zu beiden Seiten über Dichtungen 530-1, 530-2 abgedichtete Verschlussbauteile 540 an, die zusammen mit dem Hohlzylinder 520 den Behälter 320 des Schmiermittelreservoirs 110 bilden.

Genauer gesagt weist das Schmiermittelreservoir 110 ein oberes Verschlussbauteil 540-1 und ein unteres Verschlussbauteil 540-2 auf, die an in gegenüberliegenden Seiten des Hohlzylinders 520 angeordnet sind. Das obere Verschlussbauteil 540-1 weist eine Ventileinheit 550 auf, die ihrerseits einen Absperrhahn 560 und einen Mehrfachanschluss 570 umfasst. Der Absperrhahn 560 weist einen Medienanschluss 580 auf, an dem ein unter einem externen Druck stehendes Medium an das Schmiermittelreservoir 110 anlegbar ist.

Der Abstand 560 ist darüber hinaus mit dem Mehrfachanschluss 570 der Art gekoppelt, dass das an dem Medienanschluss 580 anliegende Medium in den Mehrfachanschluss 570 eintreten kann, wenn der Absperrhahn 560 sich entsprechend in einem geöffneten Zustand befindet.

Neben einem Anschluss, mit dem der Mehrfachanschluss 570 an den Absperrhahn 560 angeschlossen ist, weist der Mehrfachanschluss 570 ebenfalls eine Bohrung 590 auf, über die das Medium in ein Innenvolumen des Behälters 320 einströmen kann. Hierbei ist, um eine Kontamination bzw. ein Eindringen von Fremdkörpern in den Behälter 320 zu unterbinden, ein Grobfilter 600 derart mit der Bohrung 590 verbunden, dass das einströmende Medium diesen passieren muss, bevor es in den Behälter 320 gelangt.

Darüber hinaus weist der Mehrfachanschluss 570 bei der in Fig. 7 gezeigten Variante zwei weitere Anschlüsse 610-1 und 610-2 auf. Dient der Grobfilter 600 beispielsweise nicht nur zur Filterung des über den Absperrhahn 560 einströmenden Mediums, bei dem es sich beispielsweise um Druckluft, Pressluft oder ein anderes unter Druck stehendes Gas oder Gasgemisch handeln kann, sondern ebenso geeignet ist, das Schmiermittel zu filtern, kann beispielsweise der Anschluss 610-2, der dem Grobfilter 600 gegenüberliegt, ebenfalls zum Nachfüllen oder Befüllen des Schmiermittelreservoirs 110 mit dem Schmiermittel dienen. In diesem Fall kann beispielsweise eine Verschlussschraube 620 als Schmiermittelnachfüllschraube bzw. als Verschlussschraube eines Schmiermittelnachfüllstutzen ausgebildet sein.

Über die Ventileinheit 550 kann also das unter Druck stehende, beispielsweise gasförmige Medium über den Medienanschluss 580 in das Innere des Behälters 320 gelangen. Der Absperrhahn 560 dient hierbei dazu, den Medienanschluss 580 von dem Behälter 320 trennbar zu machen. Darüber hinaus kann die Ventileinheit 550 ebenso ausgebildet sein, um einen Überdruck im Bereich des Mehrfachanschlusses und gegebenenfalls auch im Bereich des Behälters 320 abbaubar zu machen, indem die Ventileinheit 550 ein definiertes Leck aufweist, durch das eine geringe Menge des Mediums entweichen kann. Um dies zu erreichen, kann beispielsweise der Anschluss 610-1 mit einem definierten Leck 630, also beispielsweise einer Verschlussschraube mit einer definierten Bohrung oder einem anderen Leck verschlossen sein. Auch wenn dies gegebenenfalls während des normalen Betriebs der Dosiervorrichtung 100 zu einem Verbrauch des Mediums führt, kann hierdurch gegebenenfalls eine Wartung des Schmiermittelreservoirs 110 bzw. ein Nachfüllen desselben erleichtert werden.

Selbstverständlich können bei unterschiedlichen Ausführungsbeispielen auch die Anordnungen bzw. Funktionen der Absperrschraube 620 und des Lecks 630 vertauscht sein.

Der Behälter 320 bildet ein erstes Teilvolumen 640 und ein zweites Teilvolumen 650 aus, die beide druckmäßig miteinander gekoppelt sind. Bei dem in Fig. 7 gezeigten Ausführungsbeispiel sind die beiden Teilvolumina 640, 650 nicht durch ein bestimmtes Bauteil voneinander getrennt, obwohl dies im Fall anderer Ausführungsbeispiele möglich ist. Im vorliegenden Ausführungsbeispiel sind die beiden Teilvolumina 640, 650 vielmehr dadurch voneinander getrennt, dass das zweite Teilvolumen 650 vollständig mit dem Schmiermittel befüllt ist, während das erste Teilvolumen 640 einen Bereich oberhalb eines Spiegels 660 bzw. einer Oberfläche des Schmiermittels des Behälters 320 bezeichnet. Die beiden Teilvolumina 640, 650 sind daher im vorliegenden Fall keine festen Teilvolumina des Behälters 320 mit festgelegten Volumenwerten, sondern unterscheiden sich vielmehr hinsichtlich ihrer Funktion.

Daher trennt der Absperrhahn 560 den Medienanschluss 580 von dem ersten Teilvolumen 640 im Falle einer entsprechenden Stellung des Absperrhahns 560. Selbst verständlich kann der Absperrhahn 560 den Medienanschluss 580 auch mit dem ersten Teilvolumen 640 verbinden oder strömungsmäßig koppeln.

Das untere Verschlussbauteil 540-2 weist einen seitlichen Auslass 670 und einen unteren Auslass 680 auf, wobei bei unterschiedlichen Ausführungsbeispielen gegebenenfalls einer der beiden Auslässe 670, 680 auch entfallen kann.

Bei dem in Fig. 7 gezeigten Ausführungsbeispiel wird der untere Auslass 680 als Auslass 120 des Schmiermittelreservoirs 110 verwendet. Entsprechend weist dieser einen Anschluss für eine Rohrleitung 690 auf, mit deren Hilfe beispielsweise eine räumliche Trennung des Schmiermittelreservoirs von der Dosiereinrichtung 130 möglich ist. Allerdings handelt es sich hierbei um eine optionale Komponente, die beispielsweise im Falle einer alternativen Ausführung des unteren Verschlussbauteils 540-2 auch entfallen kann.

Der seitliche Auslass 670 weist bei dem in Fig. 7 gezeigten Ausführungsbeispiel ebenfalls einen Anschluss für eine Rohrleitung 700 auf, an die der in Fig. 7 lediglich schematisch dargestellte Drucksensor 340 anschließbar ist. Wie bereits im Zusammenhang mit dem Anschluss 690 erläutert wurde, kann auch der Anschluss für die Rohrleitung 700 gegebenenfalls anders ausgeführt sein oder entfallen, wenn beispielsweise eine alternative Implementierung des Verschlussbauteils 540-2 verwendet wird. So kann beispielsweise der Drucksensor 340 direkt als Teil des Verschlussbauteils 540 ausgeführt sein oder direkt unter Umgehung einer Rohrleitung mit diesem verbindbar sein.

Darüber hinaus weist das in Fig. 7 dargestellte Schmiermittelreservoir 110 ferner einen Füllstandsensor 330 auf, der in dem Inneren des Behälters 320 angeordnet ist und über eine Bohrung 710 ein Sensorsignal über die Sensorsignalleitung 370 (nicht dargestellt in Fig. 7) der Steuerschaltung 150 (nicht dargestellt in Fig. 7) bereitstellen kann. Der Füllstandsensor 330 ist hierbei als Schwimmschalter 715 ausgeführt, der bei einem Unterschreiten des Spiegels 660 des Schmiermittels unter einem bestimmten Regeln Pegel Sensorsignal abgibt. Dies kann beispielsweise durch ein Öffnen oder auch ein Schließen eines elektrischen Schaltkreises geschehen. Der Füllstandsensor 330 übermittelt so eine Information bezüglich der Vorortsmenge des Schmiermittels an die Steuereinheit 150.

Das Medium, das über den Medienanschluss 580 an das Schmiermittelreservoir 110 anlegbar ist, wird typischerweise als gasförmiges Medium bereitgestellt. Häufig wird Pressluft oder Druckluft eingeleitet. Es können jedoch auch andere gasförmige Medien zum Einsatz kommen. Hierzu zählen alle Gase oder Gasgemische, die im Zusammenhang mit dem Schmiermittel und den für die Dosiervorrichtung 100 insgesamt verwendeten Materialien hierzu geeignet sind. Hierzu zählen beispielsweise Stickstoff aber auch Edelgase (z. B. Helium, Neon, Argon), sofern hierfür ein entsprechender Bedarf besteht. Das gasförmige Medium wird hierbei typischerweise unter einem Druck von einigen bar (z.B. 4-6 bar) an den Medienanschluss 580 eingeleitet. Als Schmiermittel wird häufig ein Öl verwendet.

Sollten andere Kombinationen von Schmiermittel und Medium in Betracht gezogen werden, kann es gegebenenfalls ratsam sein, zwischen dem ersten und dem zweiten Teilvolumen 640, 650 gegebenenfalls einen verschiebbaren oder verformbaren Trennkörper in Form einer Membran oder eines Kolbens einzusetzen, um eine Interaktion, Reaktion oder Vermischung des Mediums und des Schmiermittels gegebenenfalls zu unterbinden.

Aufgrund der beschriebenen Anordnung und Ausgestaltung des Schmiermittelreservoirs 100 kann dieses - abgesehen von einem Verlust durch das gegebenenfalls implementierte, optionale Leck 630 - ohne Verbrauch des Mediums betrieben werden.

Steht beispielsweise kein externes, unter Druck stehendes Medium zur Verfügung, kann bei Ausführungsbeispielen eine Druckerzeugung auch im Rahmen des Schmiermittelreservoirs 110 erfolgen. Das Schmiermittelreservoir 110 kann so einen mit einem Federelement beaufschlagten Kolben oder eine mit einem Federelement beaufschlagte Membran aufweisen, wobei der Kolben oder die Membran so angeordnet ist, dass diese das aufgenommene Schmiermittel unter Druck setzen können. Das Federelement kann beispielsweise eine Druckfeder, eine Zugfeder, eine Luftfeder, eine Gasdruckfeder, eine Torsionsfeder, eine Drehstabfeder, eine Biegefeder oder eine Elastomerfeder oder einen anderen Federtyp umfassen. Somit kann das Schmiermittelreservoir 110 ausgebildet sein, um den Druck auf das aufgenommene Schmiermittel auszuüben. Je nach verwendetem Federtyp können unterschiedliche Federgeometrien verwendet werden, also beispielsweise Schraubenfedern, Tonnenfedern, Tellerfedern oder auch Blattfedern, um nur einige Beispiele zu nennen. Hierdurch kann gegebenenfalls eine externe Druckquelle, also beispielsweise eine Pumpe oder eine Pressluftzuführung eingespart werden.

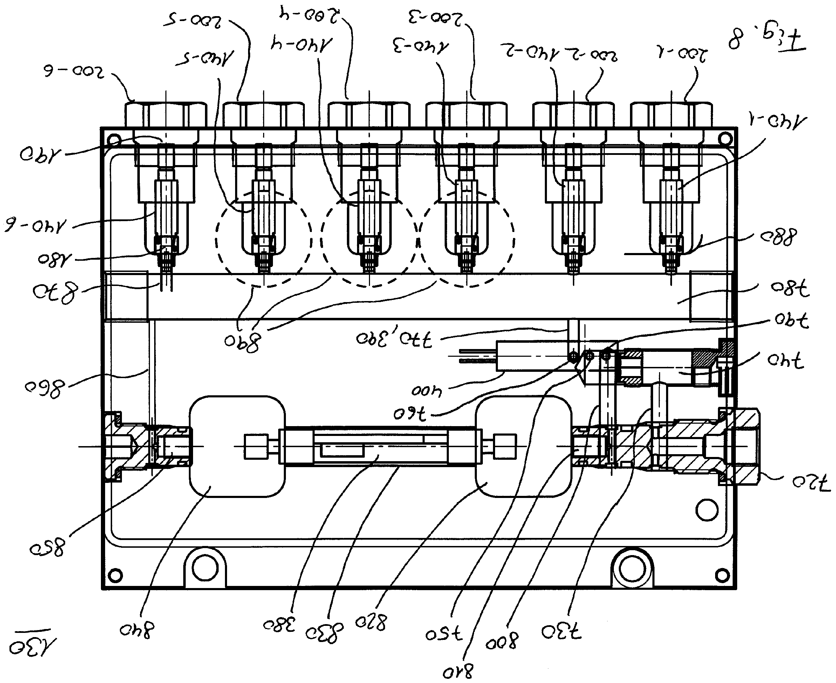

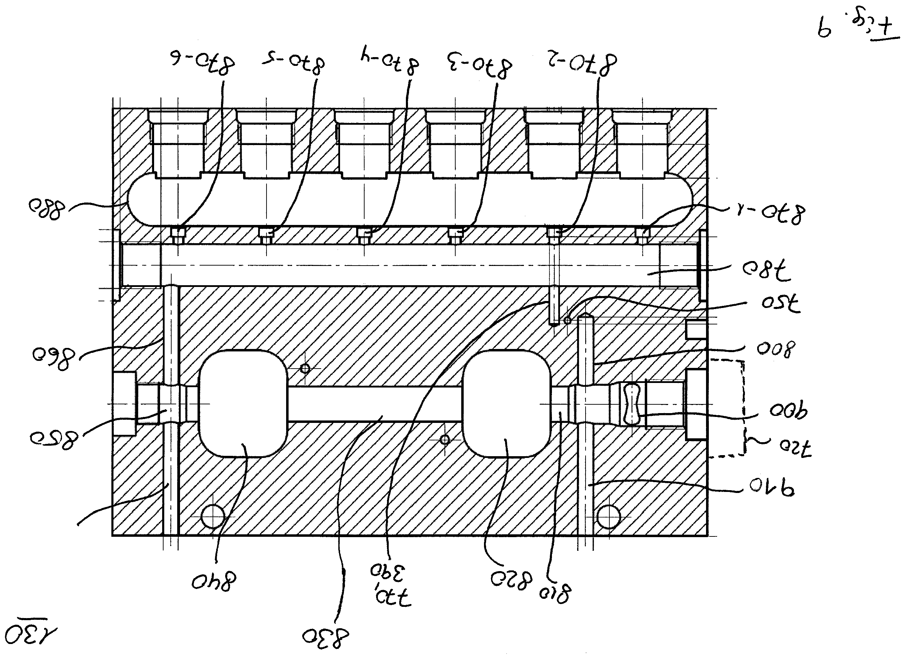

Bevor im Zusammenhang mit den Figuren 9 bis 11 anhand dreier unterschiedlicher Schnittdarstellungen in unterschiedlichen Ebenen eine Dosiereinheit 130 näher beschrieben werden soll, soll zunächst im Zusammenhang mit Fig. 8 eine Konzeptdarstellung dieser erläutert werden.

Fig. 8 zeigt eine Dosiereinrichtung 130, die räumlich trennbar von dem Schmiermittelreservoir 110 ist. Da der innere Aufbau der Dosiereinrichtung 130, wie er im Zusammenhang mit den Figuren 9 bis 11 noch näher beschrieben werden wird, vergleichsweise komplex ist, soll zunächst im Zusammenhang mit Fig. 8 der grundsätzliche Aufbau im Rahmen der dort gezeigten Konzeptdarstellung erläutert werden.

Die Dosiereinrichtung 130 weist einen Anschluss 720 für eine Rohrleitung auf, die mit dem Auslass 120 des Schmiermittelreservoirs 110 koppelbar ist. Die Dosiereinrichtung 130 kann daher über den Anschluss 720 von dem Schmiermittelreservoir 110 das Schmiermittel empfangen. Über eine Leitung 730 wird das an dem Anschluss 720 bereitgestellte Schmiermittel zunächst zu einem Volumen 740 transferiert, welches über eine Bohrung 750 das Schmiermittel dem Umgehungsventil 400 bereitstellt. In einer für den Normalbetrieb typischen Stellung des Umgehungsventils 400 (engl. normally open) verbindet diese die Bohrung 750 mit einer weiteren Bohrung 760, die das Schmiermittel über eine Leitung 770 in ein Zwischenvolumen 780 leitet. Die weitere Bohrung 760 ist somit im Normalbetrieb typischerweise offen.

Während des Betriebs der Dosiervorrichtung 100 bzw. der Dosiereinrichtung 130 kann das Umgehungsventil 400 jedoch den Schmiermittelstrom auch zu einer weiteren Bohrung 790 umleiten, die in eine Leitung 800 mündet. Dieser Zustand des Umgehungsventils 400 kann beispielsweise nur auf ein entsprechendes Steuersignal hin angenommen werden. Die weitere Bohrung 790 ist somit im Normalbetrieb geschlossen (engl. normally closed). Die Leitung 800 mündet ihrerseits über eine kurze Zwischenzuleitung 810 in einem ersten Hohlraum 820, an den sich wiederum eine Bohrung 830 anschließt. In dem Inneren der Bohrung 830 ist der Durchflusssensor 380 angeordnet. Es kann hierbei ratsam sein, den Durchflusssensor 380 gegenüber der Bohrung 830 abzudichten.

Die Bohrung 830 und der in ihm angeordnete Durchflusssensor 380 münden in einen zweiten Hohlraum 840, der wiederum über eine Zwischenleitung 850 mit einer Leitung 860 strömungsmäßig gekoppelt ist. Die Leitung 860 mündet wiederum in das Zwischenvolumen 780.

Somit kann das Schmiermittel - je nach Stellung des Umgehungsventils 400 entweder direkt über die Leitung 770 in das Zwischenvolumen 780 oder über den Umweg über den Durchflusssensor 380 in das Zwischenvolumen 780 gelangen. Anders ausgedrückt stellt die Leitung 770 die Umgehungsleitung 390 dar.

Über Zuleitungsbohrungen 870, von denen zur Vereinfachung der Darstellung der Fig. 8 lediglich die Zuleitungsbohrung 870 eines einzigen Mikroventils 140-6 mit einem Bezugszeichen gekennzeichnet ist, kann das Schmiermittel den Mikroventilen 140 eingangseitig bereitgestellt werden. Anders ausgedrückt führen die Zuleitungsbohrungen 870 das Schmiermittel zu dem ersten Anschluss 180 der Mikroventile 140, von denen in Fig. 8 insgesamt sechs, nämlich die Mikroventile 140-1, ..., 140-6 dargestellt sind. Die zweiten Anschlüsse 190 der Mikroventile 140 münden wiederum in Anschlüsse 200 für Rohrleitungen, durch die das Schmiermittel dann an die zu schmierende Stelle bzw. das zu schmierende Maschinenteile abgegeben werden kann.

Auch hier sind zur Vereinfachung der Darstellung jeweils nur der erste und zweite Anschluss 180, 190 des sechsten Mikroventils 140-6 als solche mit Bezugszeichen gekennzeichnet.

Zur elektrischen Versorgung der Mikroventile 140 können grundsätzlich unterschiedliche Bauvarianten herangezogen werden. So zeigt Fig. 8 einen angedeuteten Kanal 880, durch den die elektrischen Leitungen zur Versorgung und Ansteuerung der Mikroventile 140 geführt sind. Alternativ oder auch ergänzend können die elektrischen Zuleitungen auch über Bohrungen 890 an die Mikroventile 140 herangeführt werden.

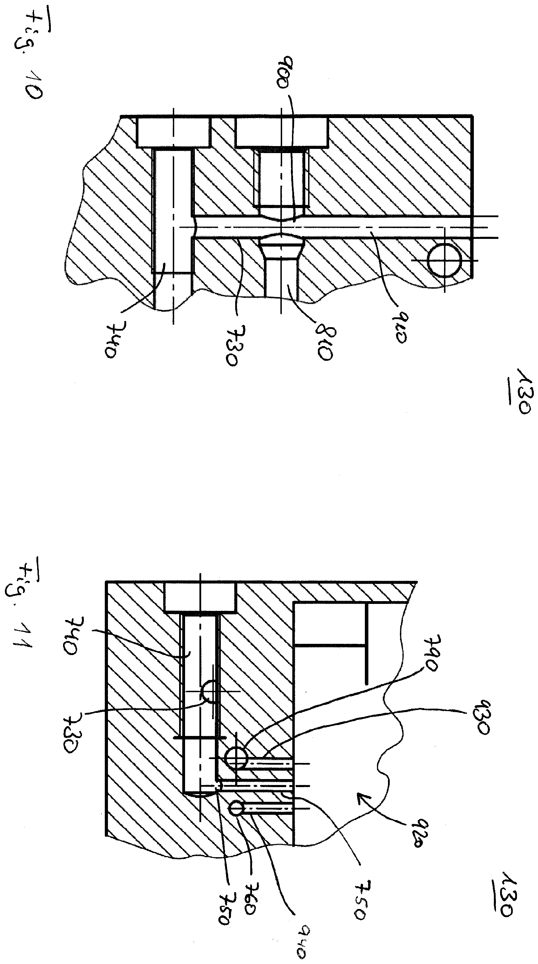

Die Figuren 9, 10 und 11 zeigen die Dosiereinrichtung 130 jeweils in einer Querschnittsdarstellung in drei unterschiedlichen, jeweils senkrecht aufeinanderstehenden Ebenen. Die Figuren 10 und 11 zeigen hierbei lediglich einen Teil der betreffenden Strukturen. Bei der Darstellung der Figuren 9 bis 11 sind die Sensoren sowie die Ventile nicht gezeigt. Es sind vielmehr lediglich die Bohrungen und andere Strukturen der Dosiereinrichtung 130 gezeigt. Die Darstellungen der Figuren 9 bis 11 illustrieren lediglich das komplexe Zusammenspiel der einzelnen Bohrungen, Leitungen und Kanäle. Hierbei soll insbesondere das Augenmerk auf die in Fig. 8 nicht dargestellt in Details gelenkt werden.

Ausgehend von dem in Fig. 9 lediglich gestrichelt gezeichneten Anschluss 720 für eine Rohrleitung, durch die das Schmiermittel der Dosiereinrichtung 130 bereitgestellt wird, gelangt dieses über eine 8-förmige Öffnung 900 in die Leitung 730 (siehe Fig. 10). Die Leitung 730 verläuft in einem Inneren eines Körpers, in dem die Dosiereinrichtung 130 ausgebildet ist. Aus diesem Grund ist eine fertigungsbedingte Bohrung 910 dargestellt, die nach Durchführung der mechanischen Herstellung beispielsweise mithilfe einer Kugel oder einer anderen Dichtung abgedichtet wird.

Fig. 11 zeigt eine Vergrößerung des Bereichs, in den das Schmiermittel über die Leitung 730 eingeleitet und weiter verteilt wird. So zeigt Fig. 11 zunächst das Volumen 740 sowie die Bohrung 750, die das Schmiermittel zu dem in Fig. 11 nicht dargestellt Umgehungsventil 400 transportiert. Fig. 11 zeigt jedoch einen Bauraum 920, in den das Umgehungsventil 400 einbringbar ist und montiert wird. Je nach Stellung des Umgehungsventils 400 kann dann das Schmiermittel über eine Bohrung 930 zu der weiteren Bohrung 790 oder über eine Bohrung 940 zu der weiteren Bohrung 760 gelangen, die das Schmiermittel über die beiden Hohlräume 820, 840 zu dem in den Figuren 9 bis 11 nicht gezeigten Durchflusssensor 340 oder direkt in das Zwischenvolumen 780 leitet.

Fig. 9 zeigt schließlich noch die Ausgestaltung der Zuleitungsbohrungen 870 der insgesamt sechs, ebenfalls nicht in Fig. 9 dargestellt in Mikroventile 140 sowie den Kanal 880 zur elektrischen Versorgung und Ansteuerung der Mikroventile.

Aufgrund der zuvor beschriebenen typischen Transportvolumina weisen die Bohrungen typischerweise Durchmesser auf, die zwischen 1 mm und etwa 10 mm, typischerweise zwischen etwa 2 mm und etwa 5 mm auf, also beispielsweise bei etwa 2,8 mm und 4,3 mm liegen.

Selbstverständlich können bei unterschiedlichen Ausführungsbeispielen unterschiedliche Anzahlen von Mikroventilen vorgesehen werden. Ebenso können die eingangs beschriebenen Variationen hinsichtlich konkreter Ausgestaltung bei unterschiedlichen Ausführungsbeispielen variiert werden.

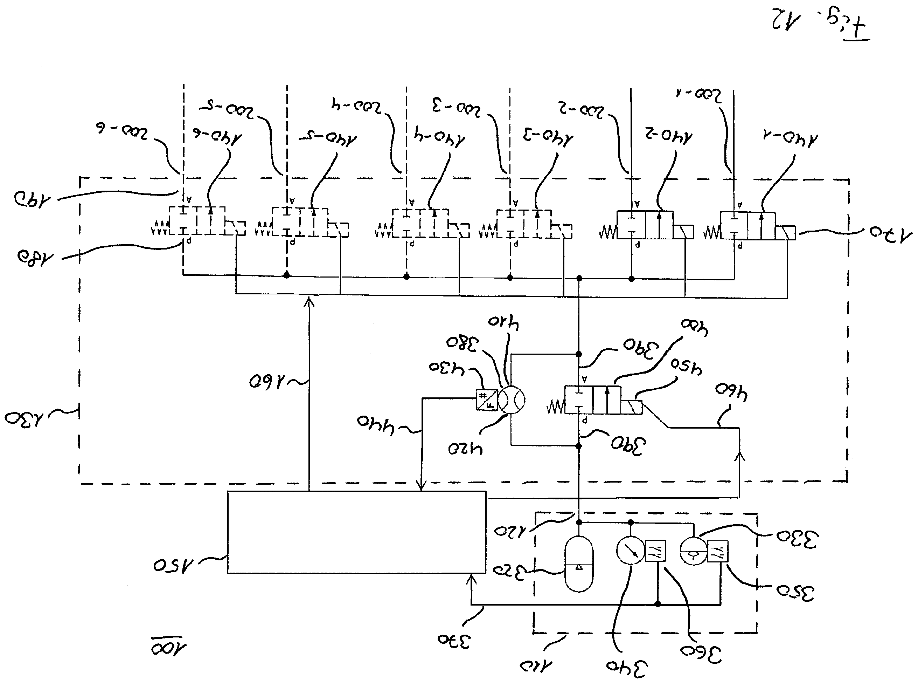

Fig. 12 zeigt einen Hydraulikplan eines weiteren Ausführungsbeispiels einer Dosiervorrichtung 100, die sich von der im Zusammenhang mit den Figuren 5 bis 11 gezeigten Ausführungsbeispiel lediglich im Hinblick auf die Ausgestaltung der Umgehungsleitung 390, des Umgehungsventils 400 und dem Durchflusssensor 380 im Hinblick auf seine Anordnung und seine strömungsmäßige Kopplung unterscheidet. Aus diesem Grund wird auf die Beschreibung zu dem Hydraulikplan aus Fig. 5 hiermit verwiesen.

Im Unterschied zu der Dosiervorrichtung 100, wie sie in Fig. 5 gezeigt ist, ist das Umgehungsventil 400 im vorliegenden Fall als 2/2-Ventil ausgestaltet. Es ist strömungsmäßig in die Umgehungsleitung 390 geschaltet und liegt parallel zu dem Durchflusssensor 380. So ist bei dem in Fig. 12 gezeigten Ausführungsbeispiel einer Dosiervorrichtung 100 bzw. einer Dosiereinrichtung 130 der erste Anschluss 420 des Durchflusssensors 380 mit dem Auslass 120 des Schmiermittelreservoirs 110 und über einen Abschnitt der Umgehungsleitung 390 mit dem Einlass des Umgehungsventils 400 gekoppelt. Entsprechend ist der zweite Anschluss 410 des Durchflusssensors 380 mit den ersten Anschlüssen der Mikroventile 140 und über einen weiteren Abschnitt der Umgehungsleitung 390 mit dem Auslass des Umgehungsventils 400 gekoppelt.

Im Unterschied zu dem in Fig. 5 gezeigten Hydraulikplan ermöglicht diese Anordnung und Ausgestaltung des Umgehungsventils grundsätzlich einen ständigen Durchfluss des Schmiermittels durch den Durchflusssensor 380. Ein vollständiges Umschalten des Durchflusses ist bei diesem Ausführungsbeispiel nicht möglich.

Das Umgehungsventil 400 ist hier vielmehr ausgebildet, um den Durchfluss des Schmiermittels teilweise auf die Umgehungsleitung 390 zu verlagern, indem auf ein entsprechendes Steuersignal der Steuerschaltung 150 hin der Aktuator 450 das Umgehungsventil 400 öffnet. Hierdurch ist eine schnelle Befüllung der angeschlossenen Schmierstellen bzw. Maschinenteile über die Mikroventile 140 bei einer Inbetriebnahme der Dosiervorrichtung 100 möglich. Die Anschlüsse für Rohrleitungen 200 bzw. - allgemein gesprochen - die Schmierstoffausgänge sind hinsichtlich eines Volumenstroms für jeden Ausgang individuell einstellbar. Die in Fig. 12 gezeigte Dosiervorrichtung 100, die auch als Kleinstmengendosiereinheit bezeichnet wird, verfügt über eine Überwachungseinheit in Form des Durchflusssensors 380 für alle Volumenströme. Das Umgehungsventil 400, das auch als Bypassventil bezeichnet wird, kann die bereits genannte, schnelle Befüllung ermöglichen.

Auch bei diesem Ausführungsbeispiel können wiederum der Füllstand und der Druck über den Füllstandsensor 330 und den Drucksensor 340 überwacht bzw. erfasst werden. Die Steuerschaltung 150 kann so neben der Ansteuerung der Mikroventile 140 auch die Bypassventilsteuerung bzw. Umgehungsventilsteuerung sowie die Flow-Überwachung bzw. Durchstömungsüberwachung übernehmen. Sie kann als Elektronikeinheit mit einem Mikroprozessor für die Steuerung und Überwachung der Ventile und der Volumenströme ausgebildet sein. Sie kann, wie bereits zuvor erläutert wurde, ergänzend oder alternativ auch als Teil einer Werkzeugmaschine, als Teil einer externen Steuerung oder einer SPS- oder die PLC-Steuerung ausgeführt sein (SPS = Speicherprogrammierbare Steuerung = (engl.) Programmable Logic Controller = PLC).

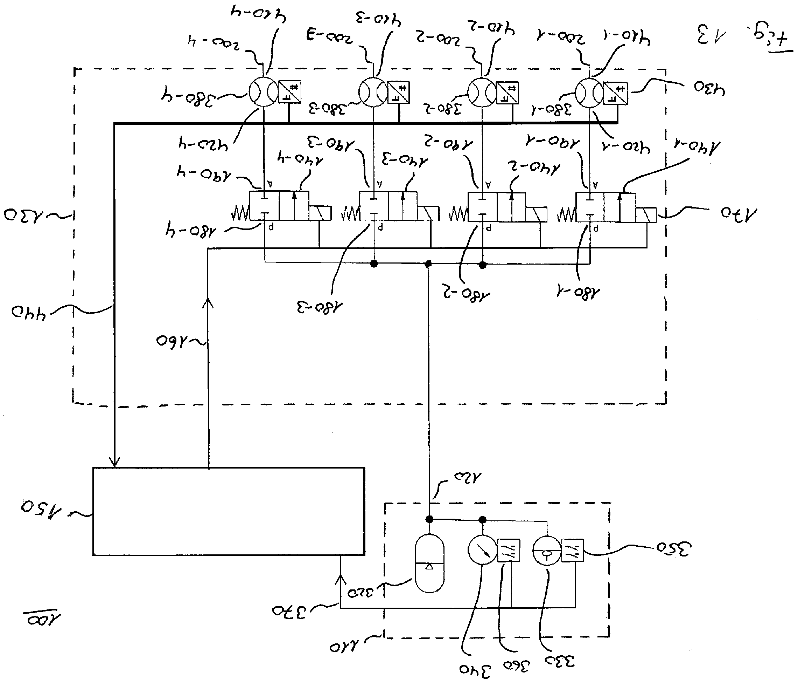

Fig. 13 zeigt ein weiteres Ausführungsbeispiel einer Dosiervorrichtung 100, die sich von dem in den Figuren 5 und 12 gezeigten Ausführungsbeispiel im Wesentlichen dadurch unterscheidet, dass bei diese nicht mehr einen gemeinsamen Durchflusssensor 380 verwendet, sondern vielmehr für jeden der Schmierstoffausgänge ein individueller Durchflusssensor 380 zum Einsatz kommt. Hierdurch ist es möglich, für jeden Ausgang den Volumenstrom individuell zu kontrollieren und genauer einstellbar zu machen. Anders ausgedrückt zeigt Fig. 13 Ausführungsbeispiel einer Dosiervorrichtung 100, also einer Kleinstmengendosiereinheit mit einer Überwachung für jeden einzelnen Volumenstrom bzw. Schmierstoff-auslass.

So unterscheidet sich das in Fig. 13 gezeigte Ausführungsbeispiel einer Dosiervorrichtung 100 ausschließlich im Hinblick auf die Dosiereinrichtung 130 im Vergleich zu dem in Fig. 12 gezeigten. So ist bei dem in Fig. 13 gezeigten Ausführungsbeispiel der Auslass 120 des Schmiermittelreservoirs 110-abgesehen von Teilen eines Leitungssystems - unmittelbar mit den ersten Anschlüssen 180 der Mikroventile 140 strömungsmäßig gekoppelt. Darüber hinaus ist bei dem in Fig. 13 gezeigten Ausführungsbeispiel einer Dosiervorrichtung 100 die Anzahl der Mikroventile gegenüber dem in Fig. 12 gezeigten Ausführungsbeispiel um zwei Mikroventile von sechs auf vier Mikroventile 140-1, ..., 140-4 reduziert, was erneut die Flexibilität im Hinblick auf die Anzahl der implementierten Mikroventile 140 bei unterschiedlichen Ausführungsbeispielen einer Dosiervorrichtung 100 illustriert.

An jeden der zweiten Anschlüsse 190-1, ..., 190-4 der Mikroventile 140 ist jeweils einen Durchflusssensor 380-1, ..., 380-4 mit einem jeweiligen ersten Anschluss 420-1, ..., 420-4 strömungsmäßig gekoppelt. Entsprechend sind die Anschlüsse für Rohrleitungen 200-1, ...,200-4 strömungsmäßig jeweils mit den zweiten Anschlüssen 410-1, ..., 410-4 der Durchflusssensoren 380 strömungsmäßig gekoppelt.

Daher weist das in Fig. 13 gezeigte Ausführungsbeispiel einer Dosiervorrichtung 100 ebenfalls kein Umgehungsventil 400 und keine Umgehungsleitung 390 auf. Diese können jedoch bei alternativen Ausführungsformen durchaus für einzelne oder mehrere Strömungssensoren 380 implementiert werden. Auch kann es gegebenenfalls ratsam sein, bei abweichenden Ausführungsbeispielen nicht jedes der Mikroventile 140 mit einem eigenständigen Durchflusssensor 380 zu bestücken. So kann es gegebenenfalls ratsam sein, bei einer Teilmenge der Mikroventile 140 einem gemeinsamen Durchflusssensor 380 vorzusehen, der optional ebenfalls mit einem Umgehungsventil und einer Umgehungsleitung ausgerüstet sein kann. Hierdurch kann es gegebenenfalls möglich sein, mehrere Maschinenteile, die nur gemeinsam geschmiert werden müssen, parallel mit Schmiermittel zu versorgen und dabei gleichzeitig Kosten erhöhende Durchflusssensoren 380 einzusparen. Auch kann es gegebenenfalls ratsam sein, manche Mikroventile 140 vollständig ohne eine Überprüfung durch einen Durchflusssensor 380 zu betreiben.

Die Durchflusssensoren 380 weisen wiederum jeweils eine Sensorschaltung 430 auf, von denen der Übersichtlichkeit halber in Fig. 13 lediglich die Sensorschaltung 430 des ersten Durchflusssensors 380-1 mit einem Bezugszeichen als solches gekennzeichnet ist. Die Sensorschaltung 430 sind über eine oder mehrere Sensorleitungen 440 mit der Steuerschaltung 150 gekoppelt.

Auch wenn im Rahmen der zuvor beschriebenen Ausführungsbeispiele Anschlüsse für Rohrleitungen beschrieben wurden, also beispielsweise die Anschlüsse 200, können bei anderen Ausführungsbeispielen diese gegen andere strömungsmäßige Kopplungen oder Leitungen ausgetauscht werden. Je nach Art des Anschlusses können diese daher allgemeiner als Einlässe, Auslässe oder - zusammenfassend - als Anschlüsse bezeichnet werden.

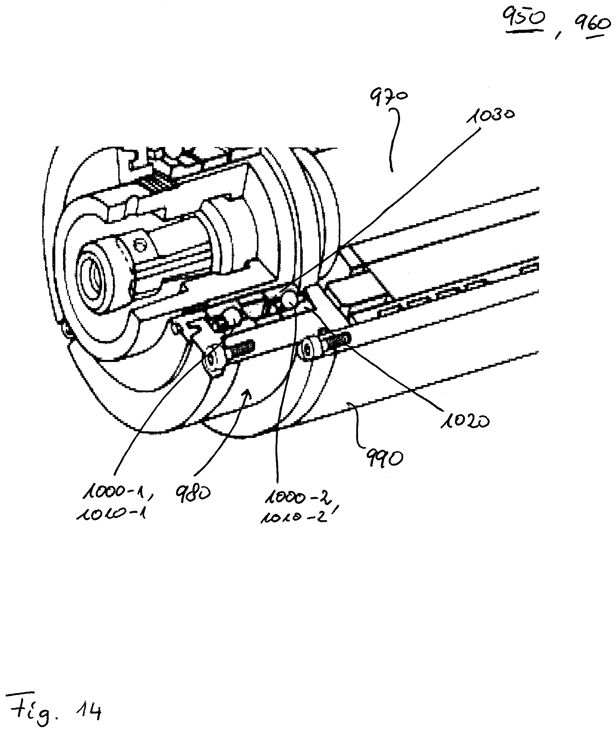

Fig. 14 zeigt eine perspektivische Darstellung einer Maschine 950, bei der es sich um eine Werkzeugmaschine 960 handelt. Hierbei zeigt Fig. 14 genauer gesagt eine Aufrisszeichnung im Bereich einer Spindel 970 und ihrer Lagereinheit 980, mit der sie gegenüber einem Gehäuse 990 der Maschine 950 gelagert bzw. geführt ist.

Die Lagereinheit 980 ist als schwimmend gestützte Lagerung (SLS) mithilfe zweier einreihiger Schrägkugellager ausgeführt, die jeweils ein Maschinenteil 1000-1 und 1000-2 darstellen. Die Schrägkugellager stellen spezielle Ausführungsformen von Wälzlagern 1010-1, 1010-2 dar. Bei abweichenden Ausführungsbeispielen können auch abweichende Wälzlager, beispielsweise Rillenkugellager, Zylinderlager oder andere Wälzlager zum Einsatz kommen.

Im vorliegenden Fall stellt die Spindel 970 das rotierende Bauteil dar, während das Gehäuse 990 ortsfest ist. Aus diesem Grund kann es gegebenenfalls ratsam sein, in eine oder mehrere Laufbahnen der Außenringe 1020 eine oder mehrere Bohrungen einzubringen, über die das Schmiermittel direkt auf die Laufbahn des Wälzkörpers 1010 und damit in direkten Kontakt zu seinen Wälzkörpern gebracht wird. Gegebenenfalls kann es darüber hinaus ratsam sein, die Öffnungen mit einer Senkung zu versehen bzw. mithilfe einer anderen Methode zum Entgraten, um ein leichteres Abwälzen der Wälzkörper zu ermöglichen und eine Gefahr eines Verkantens der Wälzkörper und der entsprechenden Laufbahn zu reduzieren.

Im Falle eines ortsfesten Außenrings 1020 kann gegebenenfalls eine Laufbahn eines Innenrings 1030 eines Wälzlagers 1010 ohne eine entsprechende Bohrung ausgeführt sein. Anders kann dies sein, wenn im Unterschied zu dem in Fig. 14 gezeigten Ausführungsbeispiel der Innenring 1030 ortsfest ist und der Außenring 1020 gegenüber diesem eine Drehbewegung ausführt. In einem solchen Fall kann es ratsam sein, in die Laufbahn des Innenrings 1030 die betreffende(n) Bohrung(en) einzubringen.

Aber auch im Falle von Gleitlagerführungen kann es ratsam sein, in die entsprechenden Gleitbahnen des Außen- oder Innenrings Öffnungen zur Abgabe des Schmiermittels vorzusehen.

Entsprechende Öffnungen sind jedoch bei Weitem nicht auf Lager beschränkt, die zur Führung von Drehbewegungen vorgesehen sind. Sind vielmehr ebenfalls im Bereich von Linearlagern einsetzbar, wobei sowohl im Bereich der Gleitlager als auch im Bereich der Wälzlager eine Schmierung mithilfe der zuvor beschriebenen Öffnungen in den Gleitbahnen bzw. Laufbahnen möglich ist.

Unabhängig von der Art der Lagerung kann das Schmiermittel zu den betreffenden Öffnungen oder zu den betreffenden Lagern mithilfe eines Leitungssystems transportiert werden, welches strömungsmäßig mit den zweiten Anschlüssen der Mikroventile 140 bzw. den entsprechenden Anschlüssen 200 gekoppelt ist. Hierbei kann das Leitungssystem beispielsweise Rohre oder Rohrabschnitte, Schläuche oder Schlauchabschnitte, sowie Kapillarleitungen umfassen.

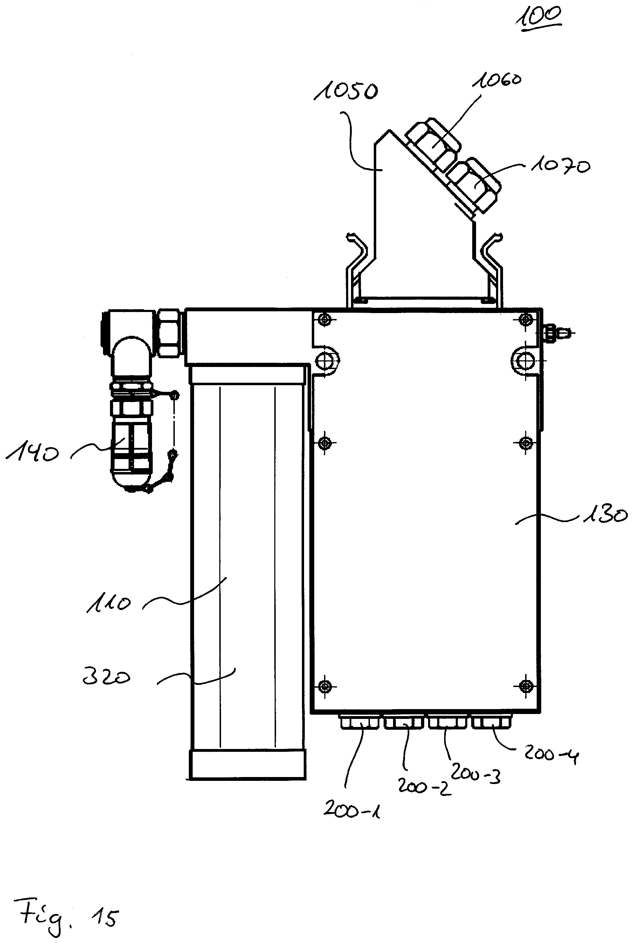

Fig. 15 zeigt eine Dosiervorrichtung 100 gemäß einem Ausführungsbeispiel, bei der das Schmiermittelreservoir 110 und die Dosiereinrichtung 130 zunächst räumlich nicht getrennt sind, sondern im Rahmen eines einzigen Gehäuses implementiert sind. Je nach konkreter Ausgestaltung kann die Dosiervorrichtung 100 jedoch ein Kopplungssystem aufweisen, welches eine Trennung des Schmiermittelreservoirs 110 von der Dosiereinrichtung 130 ermöglicht, sodass diese beiden Teilkomponenten ebenfalls räumlich trennbar sind. Die beiden Teilkomponenten können dann gegebenenfalls mithilfe eines Leitungssystems oder eines Rohrs erneut strömungsmäßig gekoppelt werden.

Das Schmierstoffreservoir 110 weist bei dem Fig. 15 gezeigten Ausführungsbeispiel eine Befüllkupplung 1040 auf, die auch als Schmierstoff-Befüllstutzen bezeichnet wird. Diese ermöglicht es, das Schmiermittel in den Behälter 320, der auch als Schmierstoffbehälter oder Schmiermittelbehälter bezeichnet wird, einzubringen. Das Schmiermittelreservoir 110, welches auch aufgrund des verwendeten Schmiermittels als Öl-Reservoir bezeichnet wird, kann mit einer internen oder einer externen (Vor-) Druckerzeugung ausgerüstet sein.

Die Dosiereinrichtung 130 umfasst eine Ventileinheit, mit vier individuell steuerbaren Präzisionsventilen bzw. Mikroventilen 140. Darüber hinaus weist sie ebenfalls eine Durchflusssensoreinheit mit vier Durchflusssensoren auf, wie dies im Zusammenhang mit Fig. 13 bereits erläutert wurde. Diese Durchflusssensoren werden auch als Flow-Sensoren, die entsprechende Einheit als Flow-Sensoreinheit bezeichnet. Entsprechend weist die Dosiereinrichtung 130 ebenfalls vier Anschlüsse 200-1, ..., 200-4 für den Schmierstoff auf, die auch als Schmierstoffausgänge bzw. Schmierstoffauslässe bezeichnet werden.

Darüber hinaus verfügt die Dosiervorrichtung 100 bzw. die Dosiereinrichtung 130 über eine elektrische Schnittstelle 1050 mit einem ersten Anschluss 1060 für eine Versorgungsspannung und einem zweiten Anschluss 1070 für Signal- und Steuerleitungen. Hierbei kann es gegebenenfalls ratsam sein, im Falle einer Auslegung der Dosiervorrichtung 100, die eine räumliche Trennung des Schmiermittelreservoirs 110 von der Dosiereinrichtung 130 ermöglicht, neben einer strömungsmäßigen Kopplung ebenfalls eine entsprechende Sensorsignalleitungskopplung und/oder Steuersignalleitungskopplung bzw. eine zweite entsprechende elektrische Schnittstelle vorzusehen.

Die bereits eingangs erläutert wurde, wird eine Dosiervorrichtung 100 auch als Mikrodosiergerät oder Mikrodosiersystem bezeichnet. Das Mikrodosiersystem kann so beispielsweise als Alternative zur klassischen Öl+Luft-Schmierung dienen. Es ist ein Schmierstoffdosiersystem, durch welches aus einem gemeinsamen Reservoir mehrere, beispielsweise bis zu vier, sechs, acht oder mehr Schmierstellen individuell mit kleinsten Mengen Öl versorgt werden können. Die Schmierstoffdosierung erfolgt über Mikroventile, welche bei entsprechender Ansteuerung einen homogenen und quasi kontinuierlichen Volumenstrom erzeugen. Der kontinuierliche Volumenstrom kann durch einen oder mehrere Sensoren überwacht und periodisch nachgeregelt werden. Je nach Schmieraufgabe kann die Schmierstoffdosierung auch diskontinuierlich erfolgen.

Es kann beispielsweise bei Anwendungen mit einer sehr hohen Dosierpräzision, einem kontinuierlichen Schmierstoffbedarf, einer präzisen Dosierung kleinster Mengen (z. B. 0.5 bis 5 mm³/min), einer unmittelbaren Anpassung der Dosiermengen oder einer direkten Dosierung auf die Lauffläche(n) der Lager zum Einsatz kommen. Anwendungsfelder umfassen so eine anspruchsvolle Schmierung schnell laufender Spindeln bis zu hohen Drehzahlen (z. B. 20000, 40000, 60000 oder mehr Umdrehungen/min) sowie Hochgeschwindigkeitslager. Sie können ohne Luftverbrauch für den Öltransport auskommen, was eine Kostenersparnis bedeuten kann, da eine aufwendige Verlegung von Druckluftleitungen reduziert oder vollständig unterbleiben kann.

Ebenso kann eine Gefahr eines Fortblasens des Ölfilms im Lager, eine Gefahr des Einbringens von Verschmutzungen (z. B. Partikel, Feuchtigkeit) deutlich reduziert werden. Auch kann sie eine schnelle Reaktionszeit bei verändertem Schmierstoffbedarf, z. B. bei veränderten Spindeldrehzahlen oder Änderungen der Umgebungstemperatur ermöglichen. Ein (teurer) Spezialschmierstoff kann gegebenenfalls eingespart werden. Unterschiedliche Viskositäten, Temperaturen oder Gegendrücke können gegebenenfalls durch das System intern kompensiert werden, sodass ein Volumenstrom gleichmäßig fließen kann. Kapillarleitungen können direkt bis zu den Laufflächenbereichen der Lager führen. Das kann bedeuten, dass eine optimalere Ausnutzung minimaler Schmierstoffmengen und eine verlustfreie Dosierung sowie eine unmittelbare Verfügbarkeit des Schmierstoffes erzielbar ist. Ein Mikrodosiergerät oder Kleinstmengendosiergerät (engl Microdosage Unit) gemäß einem Ausführungsbeispiel kann so zur luftlosen Schmierung schnell laufender Spindeln dienen.

Es kann zur Realisierung von individuell einstellbaren Schmierstoff-Kleinstmengenvolumenströmen im nl- und µl- Bereich verwendet werden. Ein Verbrauch von Hilfsluft beim Transport des Schmierstoffs kann vermieden werden. Auch ist eine Überwachung mehrerer unterschiedlicher Schmierstoffströme mit einer Überwachungseinheit möglich. Kleinste, individuell einstellbare Volumenströme können so definiert bereitgestellt werden. Ein Transportmedium, wie z.B. Luft, ist nicht notwendigerweise erforderlich. Auch eine Überwachungseinheit für mehrere Volumenströme kann vorgesehen sein.

Bei einem Kleinstmengendosiersystem handelt es sich um ein (Öl-) Dosierungs- und Versorgungssystem, durch welches aus einem gemeinsamen Reservoir mehrere Schmierstellen individuell mit kleinsten Mengen Schmierstoffs kontinuierlich versorgt werden können. Die Schmierstoffdosierung erfolgt über spezielle Mikroventile, welche bei entsprechender Ansteuerung, einen homogenen und quasi kontinuierlichen Volumenstrom erzeugen können. Der kontinuierliche Schmierstofffluss kann über einen Flow-Sensor überwacht und auch beeinflusst werden. Je nach Schmieraufgabe kann die Schmierstoffdosierung auch diskontinuierlich erfolgen. Für den Transport des Schmierstoffs ist keine Druckluft als Transportmedium erforderlich. Lediglich der Schmierstoff muss einen gewissen Vordruck aufweisen.

Typische Anwendungsfelder liegen dort, wo kleinste Mengen Öls benötigt werden (Montage, Prozesssteuerung), wo die präzise und kontinuierliche Zuführung des Schmierstoffs erforderlich ist (z. B. bei Hochgeschwindigkeitslagern und Spindellagern), wo die zeitnahe Anpassung der Schmierstoffmenge an den Schmierprozess erforderlich ist und wo keine Luft als Trägermedium vorhanden oder Luft unzweckmäßig ist. Ausführungsbeispiele können gegenüber Systemen, die Luft als Medium zur Homogenisierung der Öl-Dosierung und für den Transport verwenden (OLA), gegebenenfalls als Vorteile keinen Luftverbrauch für den Öltransport, keine Kosten für die Aufbereitung gereinigter Druckluft, eine direkte, unmittelbare Systemantwort auf geänderte Anforderungen, kein Fortblasen des Ölfilms oder keine Verschmutzung (z. B. Partikel oder Feuchte) durch Druckluft ermöglichen. Die verwendeten Mikroventile zur Kleinstmengendosierung können so gegebenenfalls eine ÖL-Luft-Schmierung ersetzen, eine Flow-Überwachung für Spindelschmierung, eine kontinuierliche Schmierstoffversorgung von Spindellagern, eine überwachte Schmierstoffversorgung von Spindellagern und eine geregelte Schmierstoffversorgung von Spindellagern bzw. High-Speed-Spindellagern ermöglichen.

Ein Mikrodosiersystem kann so für eine präzise und kontinuierliche Schmierstoff-Zuführung im µl-Bereich sorgen. Eine genaue Dosierung des Schmierstoffs in kleinsten Mengen und seine kontinuierliche Zuführung ist bei den oben genannten Anwendungsszenarien gefragt. Ausführungsbeispiele können mit einer solch hohen Präzision, wie sie sonst nur im Medizin- und Pharmabereich üblich ist, arbeiten. Mit einem solchen System können bis zu vier, sechs, acht oder mehr Schmierstellen individuell mit Öl versorgt werden. Es kann über Kapillarleitungen transportiert werden, welche direkt bis an die Laufflächen der Lager geführt werden können. Dadurch ist eine präzise und bedarfsgerechte Schmierstoffversorgung sowie effektive Nutzung des Schmierstoffs in äußerst geringen Mengen möglich.

Die Schmierstoffdosierung erfolgt über Mikroventile, deren Durchsätze individuell steuerbar sind und die je nach Anforderung den Schmierstoff schubweise oder in einem kontinuierlichen Volumenstrom dosieren. Er kann für jede Schmierstelle einzeln im Bereich von 0,5 bis 5 µl/min eingestellt werden. Zum Vergleich hat ein normaler Tropfen Öl ein Volumen von etwa 50 µl. Ein Schmiersystem gemäß einem Ausführungsbeispiel kann also Mengen, die 1/100 bis 1/10 eines Tropfens entsprechen - und das gestreckt über eine Minute - dosieren. Der Schmierstoffbehälter des Systems steht unter Vordruck und erzeugt im Zusammenspiel mit der Ventilsteuerung einen definierten Öl-Volumenstrom. Die Vordruckerzeugung kann - je nach Systemvariante, intern durch einen Druckfederkolben oder extern durch den Anschluss von Druckluft erfolgen. Die Variante mit einer internen Vordruckerzeugung kann sich in Fällen empfehlen, bei denen am Einsatzort keine Druckluft zur Verfügung steht. Im Falle der externen Vordruckerzeugung durch Druckluft dient der Anschluss tatsächlich nur zur Aufrechterhaltung des Druckes; es wird keine Luft verbraucht.

Um zu gewährleisten, dass der Volumenstrom unabhängig von Druck, Temperatur und Viskosität konstant bleibt, kann das System mittels eines Strömungssensors überwacht und ggf. durch eine SPS- oder Maschinensteuerung nachgeregelt werden. So kann so erreicht werden, dass es im Spindellager zu keiner zusätzlichen Wärmeentwicklung durch ungleichmäßige Öl-Dosierung kommen kann.

Gegenüber herkömmlichen Öl+Luft-Schmiersystemen benötigt das Mikrodosiersystem für den Öltransport keine teure Druckluft. Somit besteht auch keine Gefahr, dass der Ölfilm durch Druckluft weggeblasen wird. Genausowenig können Partikel oder Feuchtigkeit mit der Luft zur Schmierstelle gelangen.

Ein weiterer Vorteil kann darin liegen, dass durch den Verzicht auf Luft als Trägermedium das System bei Bedarf die Schmierstoffmenge hochdynamisch verändern und damit unmittelbar auf Öl-Bedarfsänderungen durch wechselnde Spindeldrehzahlen oder auf Viskositätsänderungen des Schmierstoffs reagieren kann. Im Vergleich zur konventionellen Schmierung leistet die minimale Ölmenge, mit der das System arbeitet, einen zusätzlichen Beitrag zur Schonung der Umwelt. Zudem benötigt das System keine teuren Spezialschmierstoffe. Handelsübliche Spindelöle, wie sie bei Werkzeugmaschinen eingesetzt werden, können genügen. Eingesetzt werden kann das Mikrodosiersystem überall dort, wo eine präzise Ölzuführung in kleinsten Mengen erforderlich ist. Also nicht nur an Spindellagern, sondern z.B auch in der automatisierten Teilemontage an Fließbändern und Taktstraßen.

Prototypen haben gezeigt, dass es möglich ist, ein Mikrodosiergerät gemäß einem Ausführungsbeispiel zu schaffen, welches die folgenden technischen Daten hat: Schmierstoff: Öl; Kapazitäten: 125 ml bei interner Druckerzeugung und 350 ml bei einer Ausführung mit Hilfsluft mit einem Druck von mehr als 3bar; Dosierung: kontinuierlich 0.5 -5 mm³/min; Auslässe: 4; Vordruckerzeugung: intern oder extern (bei einer Ausführung mit Hilfsluft mit einem Druck von mehr als 3bar); Ausgangsdruck: 1-3bar; Betriebsspannung: 12 / 24 VDC; Ansteuerung: SPS / PLC-kompatibel; Einsatztemperaturen: 10 bis 50 °C; Betriebsviskosität: 20-200 mm²/s; Füllstandsüberwachung: ja. Hierbei ist jedoch zu beachten, dass es sich bei diesen technischen Daten nur um solche von Prototypen handelt. Andere Ausführungsbeispiele können abweichende technische Daten aufweisen, wie die obige Beschreibung auch gezeigt hat.

Die gebauten Prototypen können zum Teil eine homogene und kontinuierliche Schmierstoffzuführung, eine hoch präzise Dosierung kleinster Schmierstoffmengen, eine unmittelbare Verfügbarkeit des Schmierstoffs an der Reibfläche, eine hochgenaue Abstimmung der benötigten Schmierstoffmenge, eine unmittelbare Reaktion auf veränderte Prozessparameter, eine individuelle Abstimmung der Schmierstoffmengen für jeden Auslass, einen geringeren Installationsaufwand ohne Druckluft, geringe Betriebskosten aufgrund des fehlenden Druckluftverbrauchs, eine Einspeisung mit 12/24 Volt, eine optimale Schmierstoffnutzung durch direkte Zuführung und eine verbesserte Umweltfreundlichkeit aufgrund eines geringeren Schmierstoff- und Luftverbrauchs ermöglichen. Hierbei müssen Ausführungsbeispiele jedoch bei Weitem nicht alle möglichen, ja nicht einmal mehrere Vorteile realisieren.

Obwohl manche Aspekte im Zusammenhang mit einer Vorrichtung beschrieben wurden, versteht es sich, dass diese Aspekte auch eine Beschreibung des entsprechenden Verfahrens darstellen, sodass ein Block oder ein Bauelement einer Vorrichtung auch als ein entsprechender Verfahrensschritt oder als ein Merkmal eines Verfahrensschrittes zu verstehen ist. Analog dazu stellen Aspekte, die im Zusammenhang mit einem oder als ein Verfahrensschritt beschrieben wurden, auch eine Beschreibung eines entsprechenden Blocks oder Details oder Merkmals einer entsprechenden Vorrichtung dar.

Je nach bestimmten Implementierungsanforderungen können Ausführungsbeispiele der Erfindung in Hardware oder in Software implementiert sein. Die Implementierung kann unter Verwendung eines digitalen Speichermediums, beispielsweise einer Floppy-Disk, einer DVD, einer Blu-ray Disc, einer CD, eines ROM, eines PROM, eines EPROM, eines EEPROM oder eines FLASH-Speichers, einer Festplatte oder eines anderen magnetischen oder optischen Speichers durchgeführt werden, auf dem elektronisch lesbare Steuersignale gespeichert sind, die mit einer programmierbaren Hardwarekomponente derart zusammenwirken können oder zusammenwirken, dass das jeweilige Verfahren durchgeführt wird.

Eine programmierbare Hardwarekomponente kann durch einen Prozessor, ein Computerprozessor (CPU = Central Processing Unit), einen Grafikprozessor (GPU = Graphics Processing Unit), einen Computer, ein Computersystem, einen anwendungsspezifischer integriertere Schaltkreis (ASIC = Application-specific Integrated Circuit), einen integrierten Schaltkreis (IC = Integrated Circuit), ein Ein-Chip-System (SOC = System on Chip), ein programmierbares Logikelement oder ein feldprogrammierbares Gatterarray mit einem Mikroprozessor (FPGA = Field Programmable Gate Array) gebildet sein.

Das digitale Speichermedium kann daher maschinen- oder computerlesbar sein. Manche Ausführungsbeispiele umfassen also einen Datenträger, der elektronisch lesbare Steuersignale aufweist, die in der Lage sind, mit einem programmierbaren Computersystem oder einer programmierbare Hardwarekomponente derart zusammenzuwirken, dass eines der hierin beschriebenen Verfahren durchgeführt wird. Ein Ausführungsbeispiel ist somit ein Datenträger (oder ein digitales Speichermedium oder ein computerlesbares Medium), auf dem das Programm zum Durchführen eines der hierin beschriebenen Verfahren aufgezeichnet ist.

Allgemein können Ausführungsbeispiele der vorliegenden Erfindung als Programm, Firmware, Computerprogramm oder Computerprogrammprodukt mit einem Programmcode oder als Daten implementiert sein, wobei der Programmcode oder die Daten dahin gehend wirksam ist bzw. sind, eines der Verfahren durchzuführen, wenn das Programm auf einem Prozessor oder einer programmierbare Hardwarekomponente abläuft. Der Programmcode oder die Daten kann bzw. können beispielsweise auch auf einem maschinenlesbaren Träger oder Datenträger gespeichert sein. Der Programmcode oder die Daten können unter anderem als Quellcode, Maschinencode oder Bytecode sowie als anderer Zwischencode vorliegen.

Ein weiteres Ausführungsbeispiel ist ferner ein Datenstrom, eine Signalfolge oder eine Sequenz von Signalen, der bzw. die das Programm zum Durchführen eines der hierin beschriebenen Verfahren darstellt bzw. darstellen. Der Datenstrom, die Signalfolge oder die Sequenz von Signalen kann bzw. können beispielsweise dahin gehend konfiguriert sein, über eine Datenkommunikationsverbindung, beispielsweise über das Internet oder ein anderes Netzwerk, transferiert zu werden. Ausführungsbeispiele sind so auch Daten repräsentierende Signalfolgen, die für eine Übersendung über ein Netzwerk oder eine Datenkommunikationsverbindung geeignet sind, wobei die Daten das Programm darstellen.

Ein Programm gemäß einem Ausführungsbeispiel kann eines der Verfahren während seiner Durchführung beispielsweise dadurch umsetzen, dass dieses Speicherstellen ausliest oder in diese ein Datum oder mehrere Daten hineinschreibt, wodurch gegebenenfalls Schaltvorgänge oder andere Vorgänge in Transistorstrukturen, in Verstärkerstrukturen oder in anderen elektrischen, optischen, magnetischen oder nach einem anderen Funktionsprinzip arbeitenden Bauteile hervorgerufen werden. Entsprechend können durch ein Auslesen einer Speicherstelle Daten, Werte, Sensorwerte oder andere Informationen von einem Programm erfasst, bestimmt oder gemessen werden. Ein Programm kann daher durch ein Auslesen von einer oder mehreren Speicherstellen Größen, Werte, Messgrößen und andere Informationen erfassen, bestimmen oder messen, sowie durch ein Schreiben in eine oder mehrere Speicherstellen eine Aktion bewirken, veranlassen oder durchführen sowie andere Geräte, Maschinen und Komponenten ansteuern.

Die oben beschriebenen Ausführungsbeispiele stellen lediglich eine Veranschaulichung der Prinzipien der vorliegenden Erfindung dar. Es versteht sich, dass Modifikationen und Variationen der hierin beschriebenen Anordnungen und Einzelheiten anderen Fachleuten einleuchten werden. Deshalb ist beabsichtigt, dass die Erfindung lediglich durch den Schutzumfang der nachstehenden Patentansprüche und nicht durch die spezifischen Einzelheiten, die anhand der Beschreibung und der Erläuterung der Ausführungsbeispiele hierin präsentiert wurden, beschränkt sei.

### Bezugszeichenliste

- 100: Dosiervorrichtung
- 110: Schmiermittelreservoir
- 120: Auslass
- 130: Dosiereinrichtung
- 140: Mikroventil
- 150: Steuerschaltung
- 160: Steuersignalleitung
- 170: Aktuator
- 180: erste Anschluss
- 190: zweiter Anschluss
- 200: Anschluss
- 210: Gehäuse
- 220: Ventilsitz
- 230: stationärer Anker
- 240: mobiler Anker
- 250: erste Abschnitt
- 260: Spule
- 270: zweiter Abschnitt
- 280: Feder
- 290: Rubinkugel
- 300: Kugelhalter
- 310: zeitlicher Verlauf
- 320: Behälter
- 330: Füllstandsensor
- 340: Drucksensor
- 350: Sensorschaltung
- 360: Sensorschaltung
- 370: Sensorsignalleitung
- 380: Durchflusssensor
- 390: Umgehungsleitung
- 400: Umgehungsventil
- 410: zweiter Anschluss
- 420: erste Anschluss
- 430: Sensorschaltung
- 440: Sensorsignalleitung
- 450: Aktuator
- 460: Steuersignalleitung
- 470: Leitungsabschnitt
- 480: Pfeil
- 490: Sensorträger
- 500: Temperatursensor
- 510: Heizelement
- 520: Hohlzylinder
- 530: Dichtung
- 540: Verschlussbauteil
- 550: Ventileinheit
- 560: Absperrhahn
- 570: Mehrfachanschluss
- 580: Medienanschluss
- 590: Bohrung
- 600: Grobfilter
- 610: Anschluss
- 620: Verschlussschraube
- 630: Leck
- 640: erstes Teilvolumen
- 650: zweites Teilvolumen
- 660: Spiegel
- 670: seitlicher Auslass
- 680: vertikaler Auslass
- 690: Anschluss
- 700: Anschluss
- 710: Bohrung
- 715: Schwimmschalter
- 720: Anschluss
- 730: Leitung
- 740: Volumen
- 750: Bohrung
- 760: weitere Bohrung
- 770: Leitung
- 780: Zwischenvolumen
- 790: weitere Bohrung
- 800: Leitung
- 810: Zwischenzuleitung
- 820: erster Hohlraum
- 830: Bohrung
- 840: zweiter Hohlraum
- 850: Zwischenleitung
- 860: Leitung
- 870: Zuleitungsbohrung
- 880: Kanal
- 890: Bohrung
- 900: Öffnung
- 910: Bohrung
- 920: Bauraum
- 930: Bohrung
- 940: Bohrung
- 950: Maschine
- 960: Werkzeugmaschine
- 970: Spindel
- 980: Lagereinheit
- 990: Gehäuse
- 1000: Maschinenteil
- 1010: Wälzlager
- 1020: Außenring
- 1030: Innenring
- 1040: Befüllkupplung
- 1050: elektrische Schnittstelle
- 1060: erste Anschluss
- 1070: zweiter Anschluss

- Ip: Spitzenstrom
- Ih: Halterstrom
- T: Taktzeit
- To: Ventilöffnungszeit
- Tp: Spitzenzeit
- Th: Haltezeit

## Patentansprüche

1. Dosiervorrichtung (100) zum Abgeben einer vorbestimmten Schmiermittelmenge, mit folgenden Merkmalen:
einem Schmiermittelreservoir (110), das ausgebildet ist, ein Schmiermittel aufzunehmen und über einen Auslass (120) des Schmiermittelreservoirs unter Druck abzugeben;
eine Dosiereinrichtung (130), die ein Mikroventil (140) umfasst, und
ein Durchflusssensor (380),
wobei das Mikroventil (140) mit dem Auslass (120) des Schmiermittelreservoirs strömungsmäßig gekoppelt ist und ausgebildet ist, um die vorbestimmte Schmiermittelmenge definiert abzugeben;
wobei die Dosiereinrichtung (130) von dem Schmiermittelreservoir (110) räumlich trennbar ist; und
wobei der Durchflusssensor (380) so angeordnet und ausgebildet ist, dass eine Durchflussmenge des Schmiermittels bestimmbar ist, die das Schmiermittelreservoir (110) durch seinen Ausgang (120) verlässt und/oder durch das Mikroventil (140) fließt.

2. Dosiervorrichtung (100) nach Anspruch 1, bei der die Dosiereinrichtung (130) und das Schmiermittelreservoir (120) wenigstens 50 cm voneinander räumlich trennbar sind.

3. Dosiervorrichtung (100) nach einem der vorhergehenden Ansprüche, bei der das Schmiermittelreservoir (110) ein erstes Gehäuse und die Dosiereinrichtung ein von dem ersten Gehäuse verschiedenes zweites Gehäuse umfasst.

4. Dosiervorrichtung (100) nach einem der vorhergehenden Ansprüche, bei der das Schmiermittelreservoir (110) und die Dosiereinrichtung (130) jeweils einen Anschluss für eine Rohrleitung aufweisen, um den Auslass (120) des Schmiermittelreservoirs (110) mit der Dosierungseinrichtung (130) über eine Rohrleitung verbindbar zu machen, wobei die Anschlüsse für die Rohrleitung ausgebildet sind, um eine hohlzylinderförmige Rohrleitung mit einem Außen- und einem Innendurchmesser aufnehmen zu können.

5. Dosiervorrichtung (100) nach einem der vorhergehenden Ansprüche, die ferner eine Umgehungsleitung (390) mit einem Umgehungsventil (400) aufweist, wobei die Umgehungsleitung (390) parallel zu dem Durchflusssensor (380) geschaltet ist, sodass ein Durchfluss des Schmiermittels durch den Durchflusssensor (380) teilweise oder vollständig auf die Umgehungsleitung (390) durch das Umgehungsventil (400) umschaltbar ist.

6. Schmiermittelsystem mit folgenden Merkmalen:
einer Dosiervorrichtung (100) nach einem der vorhergehenden Ansprüche; und
einer Maschine (950) mit einem zu schmierenden Maschinenteil (1000), wobei das Maschinenteil (1000) mit dem Mikroventil (140) der Dosiervorrichtung (130) strömungsmäßig gekoppelt ist, sodass das Mikroventil (140) die vorbestimmte Schmiermittelmenge definiert an das Maschinenteil (1000) abgeben kann; und
wobei das Schmiermittelreservoir (110) räumlich getrennt von der Dosiereinrichtung (130) angeordnet ist.

7. Schmiermittelsystem nach Anspruch 6, bei dem das Schmiermittelreservoir (110) in einem Gefahrstoffraum, einem Gefahrstoffschrank, einem Schmierstoffraum oder einem Schmierstoffschrank angeordnet ist.

8. Schmiermittelsystem nach einem der Ansprüche 6 oder 7, bei dem das Mikroventil (140) mit dem Maschinenteil (1000) über ein durchgängiges Leitungssystem gekoppelt ist, das bei einer Abgabe der vorbestimmten Schmiermittelmenge keine oder nur eine vernachlässigbare Änderung eines Volumens des Leitungssystems aufweist und/oder bei dem der Auslass (120) des Schmiermittelreservoirs (11β) mit dem Mikroventil (140) strömungsmäßig über ein Leitungssystem gekoppelt ist, das bei einer Abgabe der vorbestimmten Schmiermittelmenge keine oder nur eine vernachlässigbare Änderung eines Volumens des Leitungssystems aufweist.

9. Verfahren zum Abgeben einer vorbestimmten Schmiermittelmenge, umfassend:
Abgeben eines Schmiermittels aus einem Schmiermittelreservoir (120) unter Druck an ein Mikroventil (140) einer räumlich getrennten Dosiereinrichtung (130);
definiertes Abgeben der vorbestimmten Schmiermittelmenge über das Mikroventil (140) an ein Maschinenteil (1000) einer Maschine (950); und
Bestimmen einer Durchflussmenge des Schmiermittels, die das Schmiermittelreservoir (110) durch seinen Ausgang (120) verlässt und/oder durch das Mikroventil (140) fließt.

## Claims

1. Dosing apparatus (100) for dispensing a predetermined quantity of lubricant, having the following features:
a lubricant reservoir (110) which is designed for holding a lubricant and for dispensing under pressure said lubricant via an outlet (120) of the lubricant reservoir;
a dosing device (130) which comprises a micro-valve (140), and
a throughflow sensor (380),
wherein the micro-valve (140) is coupled in terms of flow to the outlet (120) of the lubricant reservoir and is designed for dispensing the predetermined quantity of lubricant in a defined manner;
wherein the dosing device (130) is able to be spatially separated from the lubricant reservoir (110); and
wherein the throughflow sensor (380) is arranged and designed such that a throughflow quantity of the lubricant which exits the lubricant reservoir (110) through its outlet (120) and/or which flows through the micro-valve (140) is able to be determined.

2. Dosing apparatus (100) according to Claim 1, in which the dosing device (130) and the lubricant reservoir (120) are able to be spatially separated from one another by at least 50 cm.

3. Dosing apparatus (100) according to either of the preceding claims, in which the lubricant reservoir (110) comprises a first housing and the dosing device comprises a second housing, which differs from the first housing.

4. Dosing apparatus (100) according to one of the preceding claims, in which the lubricant reservoir (110) and the dosing device (130) each have a connection for a pipeline in order to make the outlet (120) of the lubricant reservoir (110) able to be connected to the dosing device (130) via a pipeline, wherein the connections for the pipeline are designed for being able to receive a hollow-cylindrical pipeline having an outer and an inner diameter.

5. Dosing apparatus (100) according to one of the preceding claims, which further has a bypass line (390) with a bypass valve (400), wherein the bypass line (390) is connected parallel to the throughflow sensor (380) such that a throughflow of the lubricant through the throughflow sensor (380) is able to be switched partially or completely to the bypass line (390) by way of the bypass valve (400).

6. Lubricant system having the following features:
a dosing appparatus (100) according to one of the preceding claims; and
a machine (950) having a machine part (1000) to be lubricated, wherein the machine part (1000) is coupled in terms of flow to the micro-valve (140) of the dosing device (130) such that the micro-valve (140) is able to dispense the predetermined quantity of lubricant to the machine part (1000) in a defined manner; and
wherein the lubricant reservoir (110) is arranged so as to be spatially separated from the dosing device (130).

7. Lubricant system according to Claim 6, in which the lubricant reservoir (110) is arranged in a hazardous material chamber, a hazardous material cabinet, a lubricant chamber or a lubricant cabinet.

8. Lubricant system according to either of Claims 6 and 7, in which the micro-valve (140) is coupled to the machine part (1000) via a continuous line system which, when the predetermined quantity of lubricant is dispensed, does not have a, or has only a negligible, change in a volume of the line system, and/or in which the outlet (120) of the lubricant reservoir (11β) is coupled in terms of flow to the micro-valve (140) via a line system which, when the predetermined quantity of lubricant is dispensed, does not have a, or has only a negligible, change in a volume of the line system.

9. Method for dispensing a predetermined quantity of lubricant, comprising:
dispensing under pressure a lubricant from a lubricant reservoir (120) to a micro-valve (140) of a spatially separated dosing device (130);
dispensing in a defined manner the predetermined quantity of lubricant to a machine part (1000) of a machine (950) via the micro-valve (140); and
determining a throughflow quantity of the lubricant which exits the lubricant reservoir (110) through its outlet (120) and/or which flows through the micro-valve (140).

## Revendications

1. Dispositif de dosage (100) pour distribuer une quantité de lubrifiant prédéterminée, comprenant les caractéristiques suivantes :
un réservoir de lubrifiant (110) qui est réalisé de manière à recevoir un lubrifiant et à le distribuer sous pression par le biais d'une sortie (120) du réservoir de lubrifiant ;
un dispositif de dosage (130) qui comprend une microvanne (140), et
un capteur de débit (380),
la microvanne (140) étant accouplée fluidiquement à la sortie (120) du réservoir de lubrifiant et étant réalisée de manière à distribuer de manière définie la quantité de lubrifiant prédéterminée ;
le dispositif de dosage (130) pouvant être séparé physiquement du réservoir de lubrifiant (110) ; et
le capteur de débit (380) étant disposé et réalisé de manière à pouvoir déterminer une quantité de débit du lubrifiant qui quitte le réservoir de lubrifiant (110) par sa sortie (120) et/ou s'écoule à travers la microvanne (140).

2. Dispositif de dosage (100) selon la revendication 1, dans lequel le dispositif de dosage (130) et le réservoir de lubrifiant (120) sont séparés physiquement l'un de l'autre d'au moins 50 cm.

3. Dispositif de dosage (100) selon l'une quelconque des revendications précédentes, dans lequel le réservoir de lubrifiant (110) comprend un premier boîtier et le dispositif de dosage comprend un deuxième boîtier différent du premier boîtier.

4. Dispositif de dosage (100) selon l'une quelconque des revendications précédentes, dans lequel le réservoir de lubrifiant (110) et le dispositif de dosage (130) présentent à chaque fois un raccord pour une conduite tubulaire afin de permettre de raccorder la sortie (120) du réservoir de lubrifiant (110) au dispositif de dosage (130) par le biais d'une conduite tubulaire, les raccords pour la conduite tubulaire étant réalisés de manière à pouvoir recevoir une conduite tubulaire de forme cylindrique creuse avec un diamètre extérieur et un diamètre intérieur.

5. Dispositif de dosage (100) selon l'une quelconque des revendications précédentes, présentant en outre une conduite de dérivation (390) avec une vanne de dérivation (400), la conduite de dérivation (390) étant montée parallèlement au capteur de débit (380) de telle sorte qu'un débit du lubrifiant à travers le capteur de débit (380) puisse être commuté partiellement ou complètement sur la conduite de dérivation (390) par le biais de la vanne de dérivation (400).

6. Système de lubrifiant comprenant les caractéristiques suivantes :
un dispositif de dosage (100) selon l'une quelconque des revendications précédentes ; et
une machine (950) avec une partie de machine à lubrifier (1000), la partie de machine (1000) étant accouplée fluidiquement à la microvanne (140) du dispositif de dosage (130) de telle sorte que la microvanne (140) puisse distribuer de manière définie à la partie de machine (1000) la quantité de lubrifiant prédéterminée ; et
le réservoir de lubrifiant (110) étant disposé de manière séparée physiquement du dispositif de dosage (130).

7. Système de lubrifiant selon la revendication 6, dans lequel le réservoir de lubrifiant (110) est disposé dans un espace pour substances dangereuses, une armoire pour substances dangereuses, un espace de lubrifiant ou une armoire de lubrifiant.

8. Système de lubrifiant selon l'une quelconque des revendications 6 ou 7, dans lequel la microvanne (140) est accouplée à la partie de machine (1000) par le biais d'un système de conduite continu qui, en cas de distribution de la quantité de lubrifiant prédéterminée, ne présente aucune variation ou seulement une variation négligeable d'un volume du système de conduite, et/ou dans lequel la sortie (120) du réservoir de lubrifiant (11β) est accouplée fluidiquement à la microvanne (140) par le biais d'un système de conduite, qui, en cas de distribution de la quantité de lubrifiant prédéterminée, ne présente aucune variation ou seulement une variation négligeable d'un volume du système de conduite.

9. Procédé pour distribuer une quantité de lubrifiant prédéterminée, comprenant :
la distribution d'un lubrifiant à partir d'un réservoir de lubrifiant (120) sous pression à une microvanne (140) d'un dispositif de dosage (130) séparé physiquement ;
la distribution définie de la quantité de lubrifiant prédéterminée par le biais de la microvanne (140) à une pièce de machine (1000) d'une machine (950) ; et
la détermination d'une quantité de débit du lubrifiant qui quitte le réservoir de lubrifiant (110) par sa sortie (120) et/ou qui s'écoule à travers la microvanne (140).
